Europäisches Patentamt

European Patent Office

Office européen des brevets

(19)

(11) Veröffentlichungsnummer : **0 091 657**
**B1**

(12) **EUROPÄISCHE PATENTSCHRIFT**

(45) Veröffentlichungstag der Patentschrift :
05.03.86

(21) Anmeldenummer : **83103364.2**

(22) Anmeldetag : **06.04.83**

(51) Int. Cl.⁴ : **G 06 F 13/00, G 11 C 19/00**

(54) **Datenübertragungseinrichtung zwischen zwei asynchron gesteuerten Datenverarbeitungssystemen mit einem Pufferspeicher.**

(30) Priorität : **08.04.82 DE 3213345**

(43) Veröffentlichungstag der Anmeldung :
**19.10.83 Patentblatt 83/42**

(45) Bekanntmachung des Hinweises auf die Patenterteilung : **05.03.86 Patentblatt 86/10**

(84) Benannte Vertragsstaaten :
**AT BE CH FR GB IT LI NL SE**

(56) Entgegenhaltungen :
**FR-A- 1 507 949**
**GB-A-  917 853**
**US-A- 3 680 051**

(73) Patentinhaber : **Siemens Aktiengesellschaft**
**Berlin und München Wittelsbacherplatz 2**
**D-8000 München 2 (DE)**

(72) Erfinder : **Wolf, Gerhard, Dipl.-Ing.**
**Chopinstrasse 5**
**D-8000 München 60 (DE)**

EP 0 091 657 B1

Jouve, 18, rue St-Denis, 75001 Paris, France

## Beschreibung

Die Erfindung betrifft eine Datenübertragungseinrichtung zwischen zwei asynchron gesteuerten Datenverarbeitungssystemen mit einem aus mehreren Speicherabschnitten zur Zwischenspeicherung je eines Datenwortes aufgebauten Pufferspeicher sowie zwei Steuereinrichtungen, von denen die eine als Eingabesteuerung synchron mit dem Systemtakt des Daten abgebenden Systems die Übergabe jeweils eines Datenwortes in einen für die Übernahme zur Verfügung stehenden Speicherabschnitt des Pufferspeichers und die andere als Ausgabesteuerung synchron mit dem Systemtakt des Daten aufnehmenden Systems die Weiterleitung jeweils eines Datenwortes aus einem für die Ausgabe zur Verfügung stehenden Speicherabschnitt des Pufferspeichers an das Daten aufnehmende System steuert.

Entsprechende Datenübertragungseinrichtungen sind zum Beispiel durch IBM Technical Disclosure Bulletin, Vol. 10, No. 1, June 1967, pp. 34-36, bekannt. Von Nachteil bei dieser bekannten Anordnung ist, daß gegebenenfalls Datenwörter während der Übertragung zwischen den beiden asynchron arbeitenden Systemen verloren gehen können, wenn ein Freiwerden des Pufferspeichers sich mit einer Eingabe oder aber ein Abrufsignal sich mit einer Bereitstellung im Pufferspeicher in der Weise überschneidet, daß sich die betroffenen Schaltkreiselemente im für die Übertragung kritischen Zeitraum in einem logich nicht einwandfrei definierten oder metastabilen Zustand befinden, wie es zum Beispiel in « Frequenz » 31 (1977) 3, Seiten 71 bis 76 erläutert ist.

Des weiteren betrifft die GB-PS 917 853 eine vergleichbare Anordnung. Jedoch ist nicht ersichtlich, was der die Steuerimpulse für die Übernahme in den Pufferspeicher bewirkende « Eingangs-Synchronisier-Impulsgenerator » umfaßt. Analoges gilt für den « Ausgangs-Synchronisier-Impulsgenerator » für den Abruf aus dem Pufferspeicher. Die von diesen Impulsgeneratoren gelieferten Übertragungsimpulse werden entsprechend der gegebenen Offenbarung unmittelbar wirksam, ohne Rücksicht darauf, ob beispielsweise im aufnehmenden Pufferspeicherabschnitt noch ein zwischengespeichertes Datenwort enthalten ist oder nicht bzw. ob im abgebenden Pufferspeicherabschnitt ein Datenwort vorhanden ist oder nicht. Auch kann bei der offenbarten Schaltung nicht ausgeschlossen werden, daß auf die jedem Pufferspeicherabschnitt zugeordneten Kontrollkippstufen gleichzeitig ein Setz- und ein Rücksetzimpuls einwirken kann, so daß die Kippstufen vorübergehend in einen nicht definierten Schaltzustand gelangen können. Daran ändern auch die vorgesehenen Verzögerungsglieder am Ausgang der Kippstufen nichts, diese Verzögerungsglieder stellen lediglich sicher, daß beim Abruf eines Datenwortes aus einem Pufferspeicherabschnitt die Übertragungsphase nicht zu kurz wird, da der Abrufimpuls sich durch Rücksetzen der zugehörigen Kontrollkippstufe selbst wieder abschaltet. Dagegen kann auf diese Verzögerungsglieder hinsichtlich der Sicherstellung zur Stabilisierung der erforderlichen Verweilzeit infolge der vorhandenen Schaltkreislaufzeiten ohne weiteres verzichtet werden. Eine derartige Anordnung wird daher insgesamt keinesfalls den gestellten Anforderungen gerecht.

Auch die durch die DE-AS 27 19 531 bekannte Anordnung arbeitet in dieser Hinsicht nicht befriedigend, wenn auch der Abruf durch den freien Pufferspeicher mit der Rückflanke der einzelnen Taktimpulse des Systemtaktes des abgebenden Datenverarbeitungssystems korreliert ist.

Aufgabe der Erfindung ist es daher, eine Datenübertragungseinrichtung der eingangs genannten Art zu schaffen, die unabhängig vom Frequenzverhältnis beider Taktsysteme einwandfrei arbeitet und dennoch bei jeweils minimalem Aufwand an Speicherplatz im Pufferspeicher einen möglichst kontinuierlichen Datenfluß am Ausgang des Pufferspeichers sichert, insbesondere wenn die Taktfrequenz des aufnehmenden Systems kleiner ist als die des abgebenden Systems.

Diese Aufgabe wird durch die im Kennzeichen des Patentanspruches 1 genannten Merkmale gelöst. Danach sind mindestens drei Speicherabschnitte im Pufferspeicher erforderlich, nämlich einer zur Bereitstellung des weiterzuleitenden Datenwortes für die Dauer einer Taktperiode ; einer zur Überbrückung der Einsynchronisierzeit vor dem Weiterleiten, solange die notwendige Einsynchronisierzeit höchstens gleich der Taktperiodendauer des aufnehmenden Systems ist, und einer zur Überbrückung der Einrastzeit einer im anliefernden Taktraster vorliegenden Speicheranforderung in das Taktraster des aufnehmenden Systems. Außerdem werden nicht nur die die Weiterleitung auslösenden Steuersignale in das Taktraster des aufnehmenden Systems, sondern auch die vom Weiterleitungstaktraster abgeleiteten Steuersignale in das Taktraster des abgebenden Systems einsynchronisiert und damit metastabile Zustände im gesamten Daten- und Steuerweg ausgeschlossen. Da des weiteren die ins Taktraster des abgebenden Systems einzusynchronisierenden Steuersignale immer mit einem möglichen Weiterleitungsimpuls korreliert sind, ist damit auch immer der Zeitpunkt fixiert, von dem an ein Speicherabschnitt zur Übernahme eines neuen Datenwortes zur Verfügung steht, so daß im eingeschwungenen Zustand immer nur ein Datenwort in den Pufferspeicher übernommen wird, wenn vorher ein zwischengespeichertes Datenwort weitergeleitet ist. Das heißt der Zufluß erfolgt bei höherer Taktfrequenz des abgebenden Systems gesteuert mit einem intermittierenden Takt im Taktraster des abgebenden Systems bei selbständiger Anpassung an die durch das aufnehmende System bedingte maximale Datenrate, ohne daß dazu ein gesondertes Anforderungs-/Quittungssystem erforderlich ist. Die sich dabei ergebenden Zeitunterschiede werden voll durch die im Pufferspeicher vorgesehenen Speicherabschnitte aufgefangen.

Ausgehend von diesem Grundprinzip beziehen sich weitere Patentansprüche

auf die Ableitung der ins Taktraster des abgebenden Systems einzusynchronisierenden Steuersignale, nämlich unmittelbar von den Taktimpulsen des aufnehmenden Systems oder von einem davon abhängigen, den Freizustand wenigstens eines Speicherabschnittes im Pufferspeicher anzeigenden Steuersignal sowie einer Kombination beider Lösungsvarianten,

auf die Behandlung dieser Steuersignale und die Ausbildung der Synchronisierschaltungen an beiden Enden des Pufferspeichers, insbesondere auch wenn Anforderungen zur Übernahme in den Puffer infolge der notwenigen Einsynchronisierzeiten zu schnell aufeinanderfolgen, sowie auf die notwendige Erhöhung der Anzahl der Speicherabschnitte im Pufferspeicher abhängig von verschiedenen Randbedingungen,

auf die Ausbildung der Pufferspeicher als normaler Speicher mit voneinander unabhängigen Schreibe- und Lesesteuerungen oder als asynchron arbeitender Nachziehpuffer mit nachgeschalteter Synchronisierstufe sowie auf die mögliche Teilintegration der Synchronisierschaltungen in die Steuerung des Pufferspeichers,

auf die Verwendung der Datenübertragungseinrichtung zusammen mit einem Rechner als Daten abgebendes System in Verbindung mit einem weiteren Pufferspeicher und/oder zusammen mit einem zwei Rechner miteinander koppelnden Übertragungssystem mit abweichendem Taktraster.

Weitere Einzelheiten der Erfindung in diesem Zusammenhang seien anhand von in der Zeichnung dargestellten Ausführungsbeispielen näher erläutert. Im einzelnen zeigen

Figur 1 ein Blockschaltbild eines ersten Ausführungsbeispieles gemäß der Erfindung,

Figur 2 ein Blockschaltbild eines zweiten Ausführungsbeispieles gemäß der Erfindung,

Figur 3 ein Blockschaltbild eines dritten Ausführungsbeispieles gemäß der Erfindung,

Figur 4 ein Impulsdiagramm zur Erläuterung der Zeitabhängigkeit beim Einsynchronisieren durch die beiden Synchronisierschaltungen,

Figur 5 ein Belegungsdiagramm der Speicherabschnitte im Pufferspeicher zur Ableitung der Mindestanzahl von Speicherabschnitten,

Figur 6 ein erstes Ausführungsbeispiel für die Synchronisierschaltungen,

Figur 7 ein dazugehöriges Impulsdiagramm für impulsförmige, einzusynchronisierende Steuersignale,

Figur 8 ein dazugehöriges Impulsdiagramm für aus wechselnden Dauersignalen bestehenden, einzusynchronisierenden Steuersignale

Figur 9 ein zweites Ausführungsbeispiel für die Synchronisierschaltungen

Figur 10 ein dazugehöriges Impulsdiagramm,

Figur 11 ein drittes Ausführungsbeispiel für die Synchronisierschaltungen,

Figur 12 ein dazugehöriges Impulsdiagramm,

Figur 13 das Blockschaltbild für ein erstes Ausführungsbeispiel des Pufferspeichers

Figur 14 ein dazugehöriges Impulsdiagramm,

Figur 15 ein Blockschaltbild eines weiteren Ausführungsbeispieles des Pufferspeichers,

Figur 16 ein dazugehöriges Impulsdiagramm,

Figur 17 ein Blockschaltbild für die Kopplung zweier Rechner durch ein Übertragungssystem mit eigenständigem abweichendem Systemtakt bei Verwendung der Datenübertragungseinrichtung gemäß der Erfindung in Verbindung mit einem weiteren Pufferspeicher und

Figur 18 ein Blockschaltbild eines zusätzlichen Pufferspeichers auf der Empfängerseite des Übertragungssystems gemäß Fig. 17.

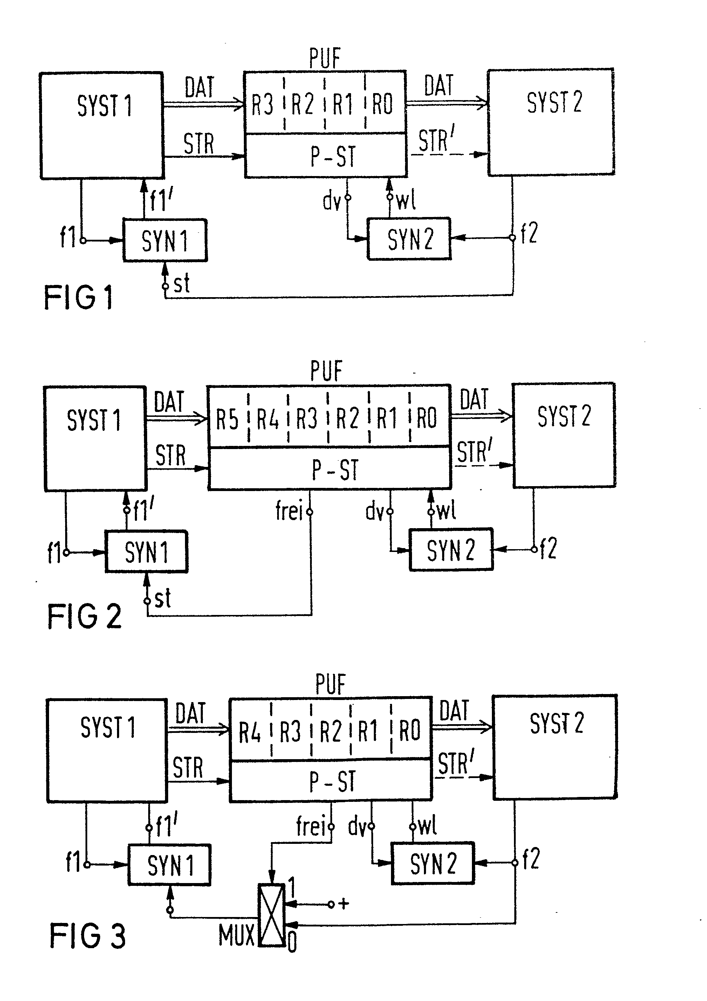

Fig. 1 gibt einen Überblick über die Datenübertragungseinrichtung, bestehend aus einem Pufferspeicher PUF mit vier Einzelregistern R3 bis R0 und der Pufferspeichersteuerung P-ST für das Einschreiben der vom Datenverarbeitungssystem SYST1 übertragenen Datenwörter DAT abhängig von begleitenden Strobesignalen STR in Einzelregister R3 bis R0 und für das Auslesen und Weiterleiten der zwischengespeicherten Datenwörter DAT an das aufnehmende Datenverarbeitungssystem SYST2 sowie die beiden erforderlichen Synchronisierschaltungen SYN1 auf der Eingabeseite und SYN2 auf der Ausgabeseite des Pufferspeichers PUF.

Beide Datenverarbeitungssysteme SYST1 und SYST2 arbeiten asynchron zueinander mit verschiedenen Systemtakten f1 und f2 und können beliebig arbeitende Systeme darstellen, z. B. einen eigenständig arbeitenden Datenspeicher mit starren Schreib- und Lesezyklen oder einen Rechner oder ein Übertragungssystem mit einem durch Sende- und Empfangseinrichtungen gekoppelten Übertragungskanal.

Beide Synchronisierschaltungen SYN1 und SYN2 arbeiten in der Weise, daß ein zugeführtes Steuersignal st bzw. dv in das jeweilige Systemtaktraster f1 bzw. f2 eingegliedert oder eingerastet und anschließend um eine, metastabile Zustände ausschließende Zeitdauer verzögert als synchrones Steuersignal f1' bzw. wl im jeweiligen Systemtaktraster wirksam wird und die Datenübergabe oder -weiterleitung auslöst.

Beim Ausführungsbeispiel gemäß Fig. 1 wird das Steuersignal st für die Synchronisierschaltung SYN1 unmittelbar von den Taktimpulsen des Systemtaktes f2 abgeleitet, die gleichzeitig die Weiterleitung eines zwischengespeicherten Datenwortes auslösen. Selbst wenn zu diesem Zeitpunkt der Pufferspeicher PUF gefüllt sein sollte, wird er wegen der gleichzeitigen Freigabe eines Speicherabschnittes für ein bereits weitergeleitetes Datenwort über einen freien Speicherabschnitt verfügen, wenn das nächste Datenwort vom abgebenden System SYST1 geliefert wird. Der Aufwand für Pufferspeicherabschnitte ist in diesem Fall am geringsten, da die Einspeicherung allein von den Taktimpulsen des aufnehmenden Systems abhängig ist. Allerdings entsteht abhängig vom Frequenzverhältnis beider Taktsysteme f1 und f2 sowie abhängig von den notwendigen Einsynchronisierzeiten ein mehr oder weniger stark ausgeprägter Zeitverzug zwischen dem die erste Datenwortübergabe auslösenden Taktimpuls des Taktsystems f2 und dem tatsächlichen Erscheinen dieses Datenwortes am Ausgang des Pufferspeichers PUF. Im eingeschwungenen Zustand mit kontinuierlichem Datenfluß am Ausgang des Pufferspeichers PUF bei maximaler, durch das Taktsystem f2 des aufnehmenden Systems SYST2 bedingter Datenrate wird dagegen die Speicherkapazität des Pufferspeichers nahezu voll ausgeschöpft.

Eine andere Lösungsvariante zeigt Fig. 2, bei der das Steuersignal st für die Synchronisierschaltung SYN1 auf der Eingabeseite von einem die Verfügbarkeit einer vorgegebenen Anzahl freier Speicherabschnitte anzeigenden Signal frei abhängig ist, dessen Vorderflanke jeweils synchron mit den Taktimpulsen des Taktsystems f2 des aufnehmenden Systems SYST2 auftritt und damit ebenfalls ein vom Weiterleitungstaktraster f2 abhängiges Steuersignal darstellt. Das hat zur Folge, daß im Gegensatz zum Ausführungsbeispiel gemäß Fig. 1 bei Vorliegen des Signales frei zunächst mit aufeinanderfolgenden Taktimpulsen des Taktrasters f1 fortlaufend Datenwörter DAT in den Pufferspeicher PUF eingegeben werden, bis das Signal frei entfällt, und daß somit der Pufferspeicher schneller mit einer einen kontinuierlichen Datenfluß am Ausgang des Pufferspeichers sichernden Anzahl von Datenwörtern gefüllt wird. Die Rückflanke des Signales frei erscheint dagegen immer synchron mit den Taktimpulsen des anderen Taktsystems f1. Infolge der normalerweise bei beiden Signalflanken verursachten Verzögerung durch die Synchronisierschaltung SYN1 sind im Pufferspeicher PUF freie Speicherabschnitte zu reservieren, da infolge des verzögerten Wirksamwerdens der Sperrung zwischenzeitlich noch weitere Datenwörter DAT angeliefert werden können, die der Pufferspeicher PUF ohne Verlust übernehmen muß.

Die Anzahl der hierfür zu reservierenden Speicherabschnitte ist von den maßgebenden Zeitbedingungen abhängig. Grob gesehen sind mindestens zwei Speicherabschnitte freizuhalten, nämlich einer für das Warten auf das Einrasten in das Taktsystem f1 und einer für das Überbrücken des metastabilen Schaltzustandes nach dem Einrasten. Das Signal frei muß also zwangsläufig vor dem Belegen dieser reservierten Speicherabschnitte beendet werden und kann nur auftreten, wenn bei n reservierten Speicherabschnitten wenigstens n + 1 Speicherabschnitte frei sind. Demzufolge wären wenigstens fünf Speicherabschnitte im Pufferspeicher PUF vorzusehen.

Durch das verzögerte Wirksamwerden des Wiedererscheinens dieses Signals wird außerdem der Pufferspeicher vorübergehend stärker entleert als es notwendig ist, so daß der Füllungsstand ständig um den das Signal frei bestimmenden Speicherabschnitt pendelt und damit die Kapazität des Pufferspeichers nicht optimal genutzt wird.

Auf das Reservieren von Speicherabschnitten, die normalerweise zusätzlich vorzusehen sind, kann jedoch bei einem unverzögerten Wirksamwerden der Rückflanken des Signales frei — was später noch erläutert wird — verzichtet werden, so daß man es bei der ursprünglichen Mindestanzahl von Speicherabschnitten im Pufferspeicher PUF belassen kann.

Eine weitere Lösungsvariante, die aus einer Kombination der beiden Lösungsvarianten gemäß Fig. 1 und Fig. 2 besteht, zeigt Fig. 3. Das Steuersignal ST wird in diesem Falle sowohl unmittelbar von den Takten des Taktsystems f2 als auch mittelbar vom Signal frei abgeleitet, das einen Multiplexer MUX steuert. Solange das Signal frei vorliegt, werden die Taktimpulse des Taktsystems f2 gesperrt und stattdessen ein Dauersignal + als Steuersignal st der Synchronisierschaltung SYN1 zugeführt, so daß bis zum Verschwinder des Signales frei zunächst wie beim Ausführungsbeispiel nach Fig. 2 mit aufeinanderfolgenden Taktimpulsen des Taktsystems f1 Datenwörter DAT in den Pufferspeicher PUF gefüllt werden. Danach steuern die Taktimpulse des anderen Taktsystems f2 wie beim Ausführungsbeispiel gemäß Fig. 1 den Zufluß.

Dabei gilt bezüglich der Reservierung von freien Speicherplätzen analoges wie beim Ausführungsbeispiel gemäß Fig. 2, jedoch entsteht in diesem Falle kein Pendeleffekt, da nach dem ersten Vollaufen des Pufferspeichers PUF die Takte des Weiterleitungstaktrasters f2 den Zufluß synchron mit dem Abfluß steuern. Würde man außerdem die Beendigung des Steuersignales frei vom Belegen eines einzigen Speicherabschnittes im Pufferspeicher PUF abhängig machen, so könnte man es ebenfalls bei der ursprünglichen Mindestanzahl von Speicherabschnitten im Pufferspeicher belassen, da nach Belegen eines Speicherabschnittes mindestens immer noch zwei freie Speicherabschnitte vorhanden sind.

Welches der drei vorangehend erläuterten Ausführungsbeispiele im Einzelfall am besten einzusetzen ist, ist im starken Umfange von den zu erfüllenden Randbedingungen abhängig, von denen nachfolgend einige näher erläutert werden sollen.

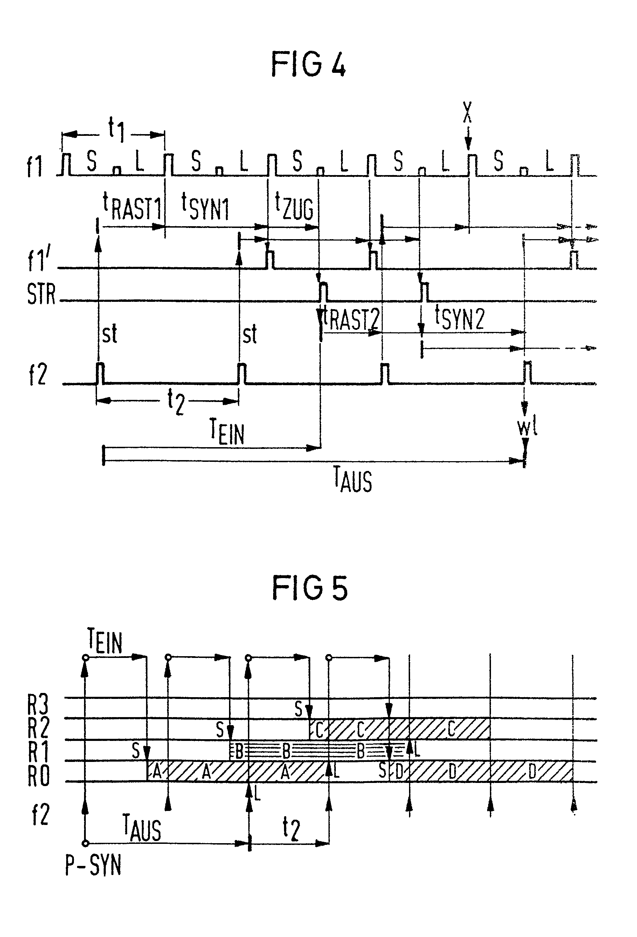

Zunächst seien anhand von Fig. 4 die wesentlichen Zeitzusammenhänge beim Einsynchronisieren einer aus dem einen Taktraster, z. B. f2, abgeleiteten Anforderung in das andere Taktraster, z. B. f1, erläutert. Zu diesem Zweck sind mit Bezug auf die Synchronisierschaltung SYN1 auf der Eingabeseite des Pufferspeichers PUF gemäß Fig. 1 bis Fig. 3 untereinander die vier maßgeblichen Impulsfolgen f1, f1′, STR und f2 angegeben. Dabei ist unterstellt, daß im Taktraster f1 mit der Periodendauer $t_1$ während jeder Periode zwei starr gekoppelte Zyklen für das Schreiben S und Lesen L eines Speichersystems ablaufen und die jeweils ein vom Pufferspeicher aufzunehmendes Datenwort DAT kennzeichnenden Strobeimpulse STR jeweils phasenverschoben zu den eigentlichen Taktimpulsen des Taktrasters f1 auftreten. Damit eine von einem Taktimpuls des Weiterleitungstaktrasters f2 ausgelöste Anforderung zum Lesen und zur Übergabe eines Datenwortes an den Pufferspeicher PUF führt, müssen zunächst folgende Zeiten abgewartet werden: $t_{RAST1}$ als Wartezeit von der Anforderung bis zum Auftreten des nächsten Taktimpulses des zuständigen Systemtaktes f1, $t_{SYN1}$ als Verzögerungszeit zur Überbrückung metastabiler Zustände und $t_{ZUG}$ als Wartezeit bis zum nächstmöglichen Lesezyklusbeginn, wobei die Summe aller drei Teilzeitabschnitte mit $T_{EIN}$ bezeichnet ist.

Abhängig von der jeweils vorliegenden Phasenlage zwischen den Taktimpulsen beider Taktraster f1 und f2 kann die Teilzeit $t_{RAST1}$ im Bereich zwischen 0 und $t_1$ schwanken, während die Teilzeiten $t_{SYN1}$ und $t_{ZUG}$ — einmal festgelegt — jeweils konstant sind.

Im vorliegenden Fall ist die Teilzeit $t_{SYN1}$ gleich der Periodendauer $t_1$ gewählt, sie kann aber je nach Erfordernis kleiner oder größer sein und bestimmt dadurch die Teilzeit $t_{ZUG}$. Der Ablauf der Teilzeit $t_{SYN1}$ führt dabei jeweils zur Auslösung eines taktsynchronen Anforderungsimpulses f1', der dann einen Strobeimpuls STR nach Ablauf der Teilzeit $t_{ZUG}$ mit Übergabe des gelesenen Datenwortes DAT zur Folge hat.

Die Belegung eines Speicherabschnittes im Pufferspeicher PUF führt damit immer zu einem mit den Taktimpulsen des abgebenden Systems f1 synchronen Steuersignal dv für die andere Synchronisierschaltung SYN2, das in das andere Taktsystem f2 einzusynchronisieren ist. Dabei muß $t_{RAST2}$ eine Wartezeit ab Belegung bis zum Auftreten eines Taktimpulses im Taktsystem f2 und $t_{SYN2}$ eine Verzögerungszeit zur Überbrückung der metastabilen Zustände abgewartet werden, bis mit einem beim anschließenden Taktimpuls des Weiterleitungstaktrasters f2 ausgelösten Signal wl das zwischengespeicherte Datenwort endgültig weitergeleitet werden kann. Von der Anforderung eines Datenwortes bis zu dessen tatsächlicher Weiterleitung vergeht damit eine beträchtliche Zeit, nämlich $T_{AUS}$. Auch in diesem Falle ist die Teilzeit $t_{SYN2}$ wiederum gleich der Periodenzeit t2 gewählt. Sie kann gleichfalls kleiner oder größer sein. Bei einer vom ganzzahligen Vielfachen der Periodenzeit t2 abweichenden Teilzeit $t_{SYN2}$ ist für die Einrastung ein vom Zeitpunkt des Auftretens der Takimpulse im Taktraster f2 abweichender, durch Taktimpulse eines verschobenen Taktrasters festgelegter Zeitpunkt so zu wählen, daß das Ende der Teilzeit $t_{SYN2}$ mit dem jeweils nachfolgenden Taktimpuls im originären Taktraster f2 endet. Die Phasenverschiebung beider synchroner Taktraster entspricht dann der Teilzeit $t_{SYN2}$, nur daß mit jedem Taktimpuls des originären Taktrasters die Weiterleitung des jeweiligen Datenwortes zeitgerecht beginnen kann. In jedem Falle kann die Teilzeit $t_{RAST2}$ bis zu den durch die Impulse des phasenverschobenen Einrasttaktrasters festgelegten Rastzeitpunkten, die die Teilzeit $t_{SYN2}$ starten, zwischen 0 und der Periodendauer $t_2$ betragen. In analoger Weise ließe sich auch die Gesamtzeit $T_{EIN}$ auf der Eingabeseite, insbesondere auch durch Verkürzung der Teilzeit $t_{ZUG}$, verkürzen. Solange es die Randbedingungen zulassen, erscheint es jedoch zweckmäßig, die Teilzeiten $t_{SYN1}$ und $t_{SYN2}$ gleich der Periodendauer $t_1$ bzw. $t_2$ zu bemessen, da dies weniger aufwendig ist.

Fig. 5 verdeutlicht die Auswirkungen der Gesamtzeiten $T_{EIN}$ und $T_{AUS}$ auf die für den Pufferspeicher erforderliche Mindestanzahl von Speicherabschnitten R... Zu diesem Zweck sind vier Speicherregister R0 bis R3 dargestellt, in die nacheinander die Datenwörter A bis D mit S eingeschrieben und mit L für die Dauer einer Periode $t_2$ zum Weiterleiten freigegeben werden. Solange $t_{SYN2}$ die Periodendauer $t_2$ nicht übersteigt, sind unabhängig von $T_{EIN}$ drei Speicherabschnitte ausreichend. Um jedoch Phasenschwankungen abfangen zu können, wenn $T_{EIN}$ sich einem ganzzahligen Vielfachen der Periodendauer $t_2$ nähert, ist noch ein zusätzlicher Speicherabschnitt erforderlich, also insgesamt vier Speicherabschnitte. Übersteigt dagegen die Teilzeit $t_{SYN2}$ die Periodendauer $t_2$, so ist die Mindestanzahl der Speicherabschnitte ebenfalls zu erhöhen, und zwar um einen Speicherabschnitt je Verlängerung um jeweils eine Periodendauer $t_2$.

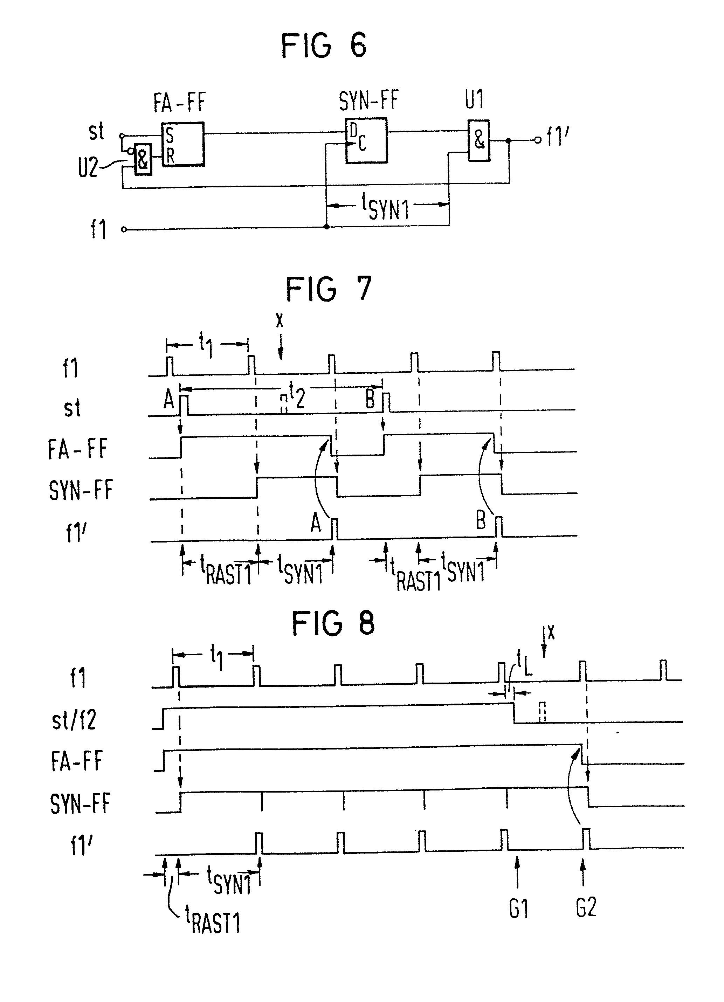

Den Grundaufbau der Synchronisierschaltungen SYN1 und SYN2 zeigt Fig. 6. In an sich bekannter Weise fängt eine RS-Kippstufe als Fangflipflop FA-FF das einzusynchronisierende Signal st, das anschließend mit der Rückflanke des nachfolgenden Taktimpulses im maßgebenden Taktsystem f1 ins Synchronisierflipflop SYN-FF übernommen wird und damit «einrastet». Um die Teilzeit $t_{SYN1}$ verzögert wird dann das Ausgangssignal des Synchronisierflipflops SYN-FF über ein UND-Glied U1 mit einem Taktimpuls ausgewertet. Bei $t_{SYN1} = t_1$ ist es ein weiterer Impuls des Taktrasters f1, der dann einen Ausgangsimpuls f1' liefert, der gleichzeitig über das UND-Glied U2 das Fangflipflop FA-FF zurücksetzt.

Ein dazugehöriges Impulsdiagramm zeigt Fig. 7 für ein aus Einzelimpulsen A und B bestehendes Steuersignal st. Daraus wird ersichtlich, daß einzusynchronisierende Impulse des Steuersignales st nur dann zu einem korrespondierenden Ausgangsimpuls f1' führen, wenn der Abstand $t_2$ zwischen den einzusynchronisierenden Steuerimpulsen A und B ausreichend groß ist, damit das Fangflipflop FA-FF rechtzeitig zurückgesetzt werden kann. Es muß also bei $t_{SYN1} = t_1$ die Bedingung $t_2 \geqq 2t_1$ erfüllt sein. Würde dagegen gegenüber dem gewählten Bei-

spiel der Abstand $t_2$ halbiert, was durch den gestrichelten Zwischenimpuls zum Zeitpunkt X angedeutet ist, und damit die einzuhaltende Zeitbedingung nicht erfüllt, so würde diese Anforderung unterdrückt, da das Fangflipflop FA-FF noch nicht zurückgesetzt ist. Für diese Fälle sind daher Sonderschaltungen erforderlich, die später noch erläutert werden.

Das in Fig. 8 gezeigte zugehörige Impulsdiagramm unterscheidet sich gegenüber dem von Fig. 7 durch den Umstand, daß das einzusynchronisierende Signal st aus länger anhaltenden Steuerimpulsen besteht, die eine Folge von Anforderungen darstellen und für die gesamte wirksame Dauer Ausgangsimpulse f1' synchron mit den Taktimpulsen des bestimmenden Taktsystems f1 auslösen, wie es die Ausführungsbeispiele nach Fig. 2 und 3 voraussetzen. Auch in diesem Falle erfolgt die Zurücksetzung des Fangflipflops FA-FF verzögert gegenüber dem Ende des Steuersignales st, so daß bei einer Umsteuerung auf die Taktimpulse des anderen Taktsystems f2 gemäß dem Ausführungsbeispiel von Fig. 3 der nächste mögliche Anforderungsimpuls des Steuersignals st gegebenenfalls unterdrückt wird, wenn er zwischen den beiden Zeitgrenzen G1 und G2, wie gestrichelt zum Zeitpunkt X angedeutet, auftritt. Auch in diesem Falle sind besondere Schaltmaßnahmen zu ergreifen, damit die Synchronisierschaltungen SYN1 und SYN2 einwandfrei arbeiten.

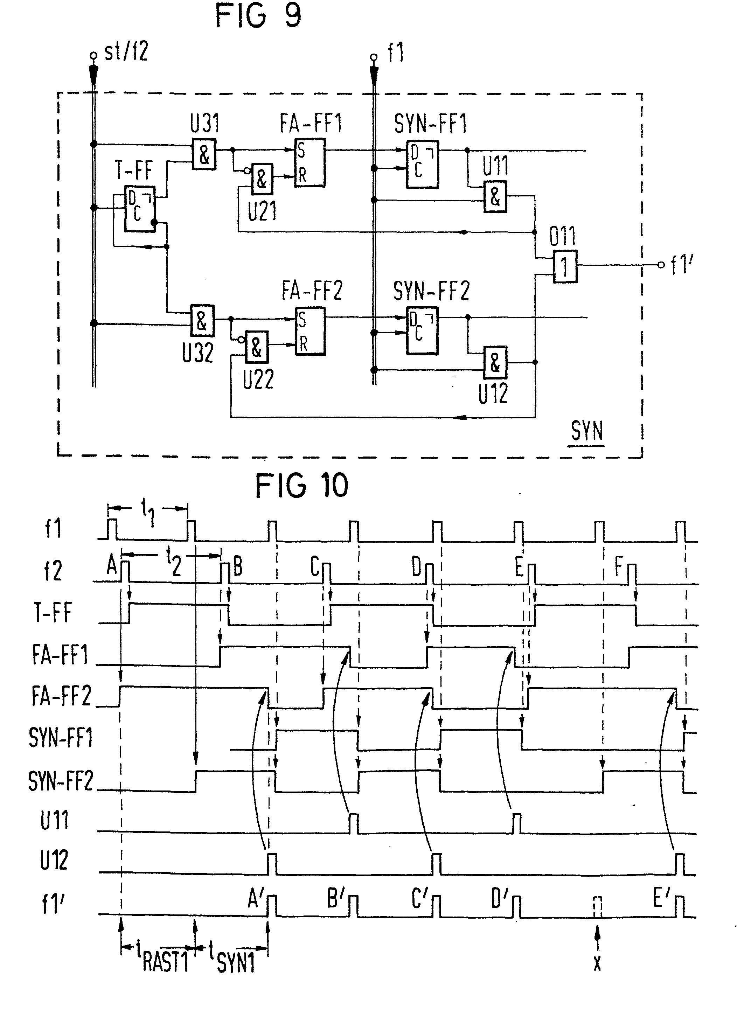

Fig. 9 zeigt ein erstes Ausführungsbeispiel einer solchen ergänzten Synchronisierschaltung, die sich gegenüber der von Fig. 6 im wesentlichen dadurch unterscheidet, daß zwei einfache Synchronisieranordnungen parallel zueinander vorgesehen sind und über eine vorgeschaltete Teilerschaltung, z.B. in Form einer rückflankengesteuerten Kippstufe T-FF, mit jedem eingehenden Anforderungsimpuls st/f2 abwechselnd wirksam geschaltet werden, wobei die Signalausgänge beider Synchronisieranordnungen über ein ODER-Glied 011 zusammengefaßt sind.

Fig. 10 zeigt ein dazugehöriges Impulsdiagramm für impulsförmige Einzelanforderungen A bis F im Taktraster f2, die in das Taktraster f1 einzusynchronisieren sind. Analoges gilt auch für Anforderungen aus Dauerimpulsen gemäß Fig. 8. Dieses Impulsdiagramm verdeutlicht des weiteren, wie abhängig vom Frequenzverhalten und von der jeweiligen Phasenlage beider Taktraster f1 und f2 in Anpassung an die mögliche maximale Datenflußrate des Weiterleitungstaktrasters f2 der durch die einsynchronisierten Steuerimpulse f1' gesteuerte Zufluß in den Pufferspeicher selbständig geregelt wird. So führen die ersten vier aufeinanderfolgenden Anforderungsimpulse A bis D im Taktraster f2 nach dem jeweiligen Einrasten und Verzögern unmittelbar zu aufeinanderfolgenden korrespondierenden Ausgangsimpulsen A' bis D' im Taktraster f1, während zwischen den Ausgangsimpulsen D' und E' ein zum Zeitpunkt X möglicher weiterer und gestrichelt angedeuteter Ausgangsimpuls unterdrückt wird, ohne daß eine Anforderung verloren geht.

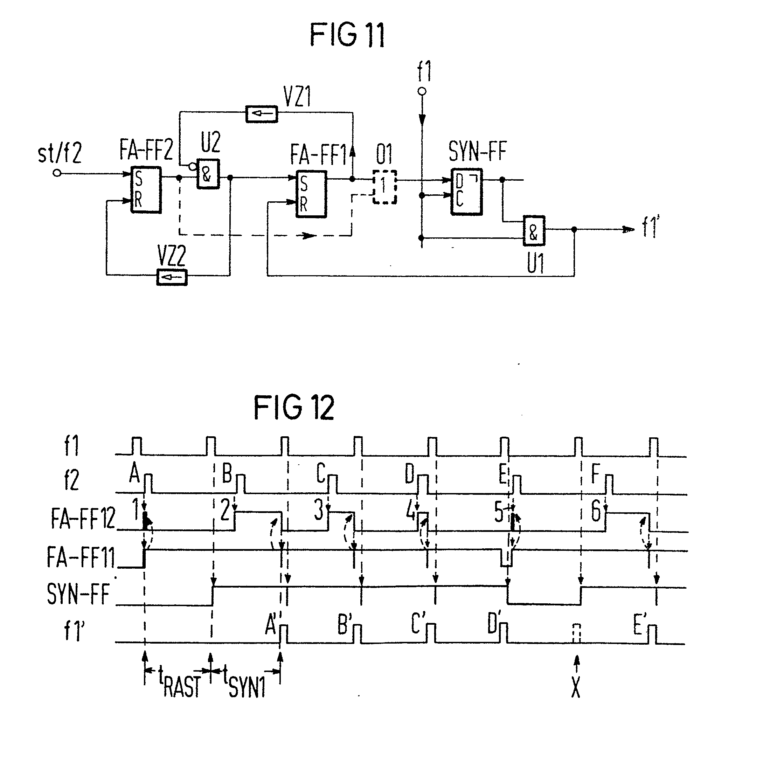

Fig. 11 zeigt eine andere Lösungsvariante für die Synchronisierschaltungen SYN1 und SYN2 zur Bewältigung zu schnell aufeinanderfolgender Anforderungen, bei der dem Synchronisierflipflop SYN-FF zwei in Reihe geschaltete Fangflipflops FA-FF2 und FA-FF1 vorgeschaltet sind, von denen das erste in der Reihe sofort nach Weiterleitung einer Anforderung an das nachfolgende Fangflipflop FA-FF1 wieder zurückgesetzt wird und damit für die nächste Anforderung zur Verfügung steht, obwohl die vorhergehende Anforderung gegebenenfalls noch nicht eingerastet und damit das eigentliche Fangflipflop FA-FF1 noch nicht wieder frei ist. Verzögerungsglieder VZ1 und VZ2 für die Rückkopplung der Ausgangssignale der beiden Fangflipflops auf deren Steuereingänge in der gezeigten Weise verhindern dabei, daß die jeweiligen Eingangssignale nicht zu früh abgeriegelt werden und die Fangflipflops definierte Zustände erreichen können.

Die Arbeitsweise dieser Anordnung ergibt sich im übrigen aus dem dazugehörigen Impulsdiagramm von Fig. 12. Wenn das Fangflipflop FA-FF1 frei ist, wird eine vom Eingangsflipflops FA-FF2 entgegengenommene Anforderung, zum Beispiel Impuls A und E, sofort an das andere Fangflipflop FA-FF1 weitergeleitet und damit das Eingangsflipflop leicht verzögert wieder frei. Ist dagegen das Fangflipflop FA-FF1 noch belegt, so kann das Ausgangssignal des gesetzten Eingangsfangflipflops FA-FF2 infolge der noch andauernden Sperrung des UND-Gliedes U2 (Fig. 11) nicht weitergeleitet werden und das Eingangsfangflipflop FA-FF2 bleibt gesetzt, bis eine Übergabe der Anforderung an das nachfolgende Fangflipflop FA-FF1 möglich ist — so bei den Anforderungsimpulsen B bis D und F im Taktraster f2. Die korrespondierenden Ausgangsimpulse A' bis E' des Steuersignales f1' folgen wiederum taktsynchron mit den Taktimpulsen des Eingliederungstaktes f1, wobei zur Anpassung an die maximale Datenflußrate im Taktraster f2 wiederum gegebenenfalls Taktimpulse des Taktrasters f1 für das Steuersignal f1' unterdrückt werden, wie beim Zeitpunkt X durch den gestrichelten Impuls angedeutet ist.

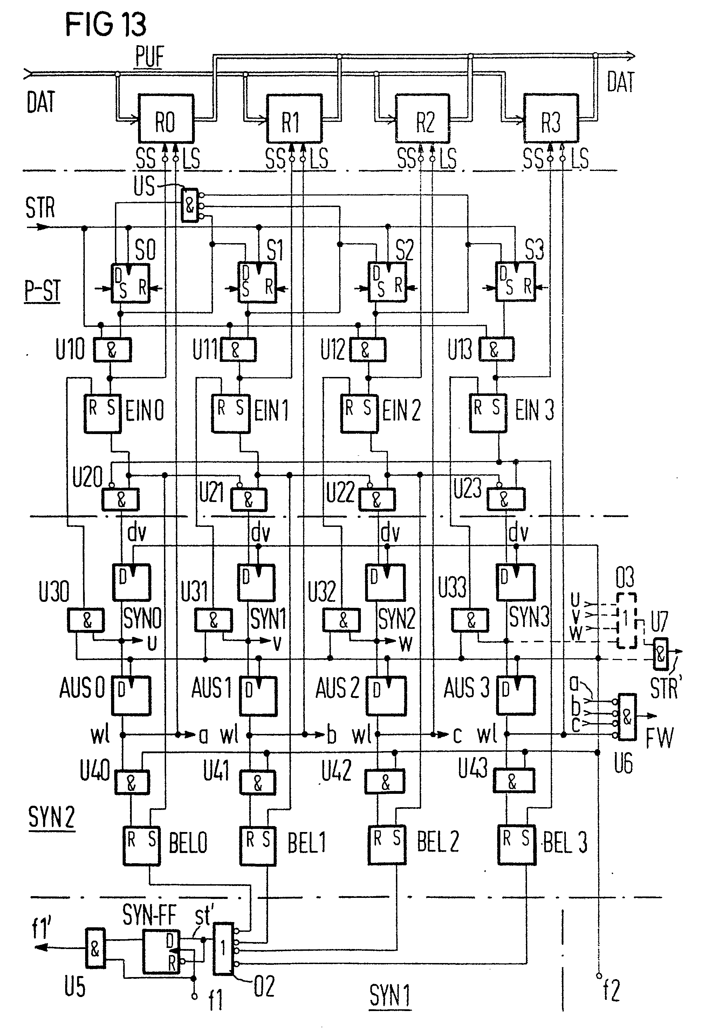

Anhand von Fig. 13 sei nun ein erstes Ausführungsbeispiel eines Pufferspeichers PUF beschrieben. Dieser besteht aus vier Einzelregistern R0 bis R3, in die die angelieferten Datenwörter DAT mit einem Schreibsignal SS von einer gemeinsamen Datenschiene übernommen und aus denen sie mit einem Lesesignal LS über eine gemeinsame Datenschiene weitergeleitet werden. Bei Ausbildung der Register R0 bis R3 in der Weise, daß nur beim Einspeichern der Informationsinhalt geändert wird, entsprechen die Lesesignale LS den Steuersignalen für eine Auswahlschaltung, zum Beispiel einen Multiplexer, die die Ausgänge der jeweils ausgewählten Register auf den gemeinsamen Ausgang durchschalten.

Die Übernahme der vom abgebenden System SYST1 angelieferten Datenwörter DAT und deren Weiterleitung an das aufnehmende System SYST2 steuert die gemeinsame Pufferspeichersteuerung P-ST, und zwar die Übernahme abhängig von den mit den Daten mitgelieferten Strobesignalen STR und die Weiterleitung abhängig von den Taktimpulsen des Taktrasters f2 im aufnehmenden System SYST2. Die zugehörige Synchronisierschaltung SYN2 ist dabei voll und die Synchronisierschaltung SYN1 auf der Eingabeseite des Pufferspeichers PUF nur teilweise in die Steuerung P-ST integriert.

Der Aufbau der Steuerung P-ST und der Synchronisierschaltung SYN2 gliedert sich in gleichartig aufgebaute Teilschaltungen, von denen jeweils eine für jedes Register R0 bis R3 vorgesehen ist. Diese Teilschaltungen weisen je ein rückflankengesteuertes Eingangs- oder Startflipflop S0 bis S3 auf, von denen jeweils nur eines gesetzt ist und das jeweils aufnehmende Register wie ein Eingabeadreßzeiger anzeigt. Diese Flipflops sind daher zu einer Art Ringschieberegister zusammengeschaltet, das von den Strobeimpulsen STR getaktet wird, wobei ein über einen der Setzeingänge S eingegebenes Zeigerbit ringförmig umläuft. Zur Schließung des Ringes ist ein UND-Glied US vorgesehen, dessen drei invertierte Signaleingänge jeweils mit einem der direkten Signalausgänge der ersten drei Flipflops S0 bis S2 im Ring verbunden sind, so daß eine Weiterleitung an das erste Flipflop S0 im Ring nur erfolgen kann, wenn die ersten drei Flipflops S0 bis S2 nicht gesetzt sind. An die direkten Signalausgänge dieser Flipflops S0 bis S3 ist jeweils eines der UND-Glieder U10 bis U13 angeschlossen, deren weiterer Signaleingang mit dem Eingang für den Strobeimpuls STR verbunden ist, so daß ein eintreffender Strobeimpuls STR nur in Verbindung mit einem der gesetzten Flipflops S0 bis S3 über eines der UND-Gatter, z. B. U10, wirksam werden und damit ein die Eingabe eines Datenwortes DAT kennzeichnendes Schaltglied, z. B. EIN0, in Form einer RS-Kippstufe über das angesteuerte UND-Glied, z. B. U10, setzen sowie das Schreibsignal für das ausgewählte Register, also R0, auslösen kann.

Den Setzausgängen der Eingabeschaltglieder EIN0 bis EIN03 ist jeweils eines der UND-Glieder U20 bis U23 nachgeschaltet, die anstelle eines nach dem FIFO-Prinzip arbeitenden Adressenzeigers für die Weiterleitung das Register mit dem jeweils zuerst eingespeicherten und damit wieder zuerst weiterzuleitenden Datenwort kennzeichnen, indem jeder Setzausgang der Eingabeschaltglieder, z. B. EIN0, das dem im Ring nachgeordneten Eingabeschaltglied, z. B. EIN1, zugeordnete UND-Glied z. B. U21, sperrt. Von den vier Ausgängen dieser UND-Glieder U20 bis U23 kann jeweils nur einer zur Zeit wirksam werden und mit dem Steuersignal dv als Leseadresse im (1-aus-n)-Code die Weiterleitung des zwischengespeicherten Datenwortes DAT einleiten.

Dazu wird das Steuersignal dv jeweils einem der nachfolgenden Synchronisierflipflops SYN0 bis SYN3 zugeleitet, die von den Taktimpulsen des Weiterleitungstaktrasters f2 getaktet werden und nach Ablauf der Teilzeit $t_{SYN2}$, die im vorliegenden Falle gleich der Taktperiode $t_2$ gewählt ist, ein nachfolgendes Ausgabeschaltglied, zum Beispiel AUS0, für die gesamte Dauer einer Taktperiode $t_2$ setzen. Gleichzeitig wird, zum Beispiel über ein zugehöriges, von den Taktimpulsen kurzzeitig aufgesteuertes UND-Glied, z. B. U30, das zugehörige Eingabeschaltglied, also EIN0, zurückgesetzt.

Die dem Steuersignal wl entsprechenden Ausgangssignale der Ausgabeschaltglieder bewirken dann als Lesesignale LS die Durchschaltung der Ausgänge des zugehörigen Registers, z. B. R0, auf die weiterleitende Datenschiene.

Jedem der Register R0 bis R3 des Pufferspeichers PUF ist weiterhin eines der Belegungsschaltglieder BEL0 bis BEL3 zugeordnet, die als RS-Kippstufen ausgebildet sind und jeweils vom Setzausgang des zugehörigen Eingabeschaltgliedes, also z. B. EIN0, gesetzt werden und damit den Ladezustand des zugehörigen Registers, z. B. R0, anzeigen. Sie werden daher erst am Ende der zugehörigen Weiterleitungsperiode, d. h. um eine Periode $t_2$ später als die Eingabeschaltglieder EIN... zurückgesetzt, was wiederum jeweils über eines der UND-Glieder U40 bis U43 in Verbindung mit einem Takt des Weiterleitungstaktrasters f2 erfolgt. Die eine Taktperiode $t_2$ früher erfolgende Rücksetzung der Eingangsschaltglieder EIN... stellt sicher, daß das nächstfolgende Steuersignal dv rechtzeitig in das Taktraster f2 eingegliedert wird, um einen kontinuierlichen Datenabfluß zu ermöglichen.

Die am Ausgang des Pufferspeichers PUF erforderliche Synchronisierschaltung SYN2 ist also vollständig in die Ausgabesteuerung des Pufferspeichers integriert. Gesonderte Fangflipflops sind nicht erforderlich, da die vorgeschalteten Eingabeschaltglieder EIN0 bis EIN3 bereits deren Aufgabe erfüllen. Sollten längere Teilzeiten $t_{SYN2}$ als die gewählte Taktperiode $t_2$ einzuhalten sein, so wären die Synchronisierflipflops SYN0 bis SYN3 in an sich bekannter Weise durch entsprechende Schaltungen zu ersetzen, zum Beispiel durch eine Kaskade von mehreren Synchronisierflipflops, wie sie zum Beispiel auch die Synchronisierflipflops, z. B. SYN0, und die Ausgabeschaltglieder, z. B. AUS0, bilden.

Die der Eingabeseite zugeordnete Synchronisierschaltung SYN1 wird, wie bereits im Zusammenhang mit Fig. 2 erwähnt, mit einem vom Freizustand wenigstens eines der Register R0 bis R3 im Pufferspeicher PUF abgeleiteten Steuersignal st angesteuert. Hierzu werden die Setzausgangssignale der Belegungsschaltglieder BEL0 bis BEL3 invertiert und über ein ODER-Glied 02 zum Signal st' zusammengefaßt, das als bereits gefangenes Steuersignal st auf ein Synchronisierflipflop SYN-FF einwirkt, das mit den Takten des anderen Taktsystems f1 getaktet wird und über ein nachgeschaltetes UND-Glied U5 entsprechend Fig. 6 das in das System SYST1 einsynchronisierte Abrufsignal f1' liefert.

Damit dabei die im vorliegenden Falle auf vier Speicherabschnitte beschränkte Speicherkapazität des Pufferspeichers ausreicht, ist — wie bereits im Zusammenhang mit Fig. 2 und Fig. 3 kurz angedeutet — vom unverzögerten Wirksamwerden der Rückflanke des Steuersignals st' Gebrauch gemacht. Das heißt, sobald der Pufferspeicher PUF gefüllt ist und das Steuersignal st' zu Null wird, wird über den invertierten Rücksetzeingang R das Synchronisierflipflop SYN-FF augenblicklich zurückgesetzt, so daß zwei Taktimpulse des Taktsystems f1 erforderlich sind, damit wieder ein Anforderungsimpuls f1' am Ausgang der Synchronisierschaltung SYN1 erscheint, was später noch am zugehörigen Impulsdiagramm verdeutlicht wird.

Um insbesondere in Verbindung mit einem das aufnehmende System SYST2 bildenden Datenübertragungssystem mit kontinuierlichem Datenfluß bei nicht ausreichenden Anzahl von Datenwörtern, DAT den Datenfluß durch Einblenden von Füllwörtern aufrecht zu erhalten, sind die Setzausgangssignale der Ausgabeschaltglieder AUS0 bis AUS3 invertiert und über ein UND-Glied U6 zusammengefaßt, das ein Signal FW zum Einblenden eines Füllwortes liefert, wenn kein Datenwort DAT zwischengespeichert ist und zur Aussendung ansteht.

Außerdem kann — falls erforderlich — von den Ausgängen der UND-Glieder U30 bis U33 über ein ODER-Glied oder aber — wie gestrichelt angedeutet — von den Ausgängen der Synchronisierflipflops SYN0 bis SYN3 und ein nachfolgendes, von den Taktimpulsen des Taktsystems f2 jeweils kurzzeitig freigegebenes UND-Glied U7 ein dem Eingangsstrobesignal STR entsprechendes Ausgangsstrobesignal STR' abgeleitet werden.

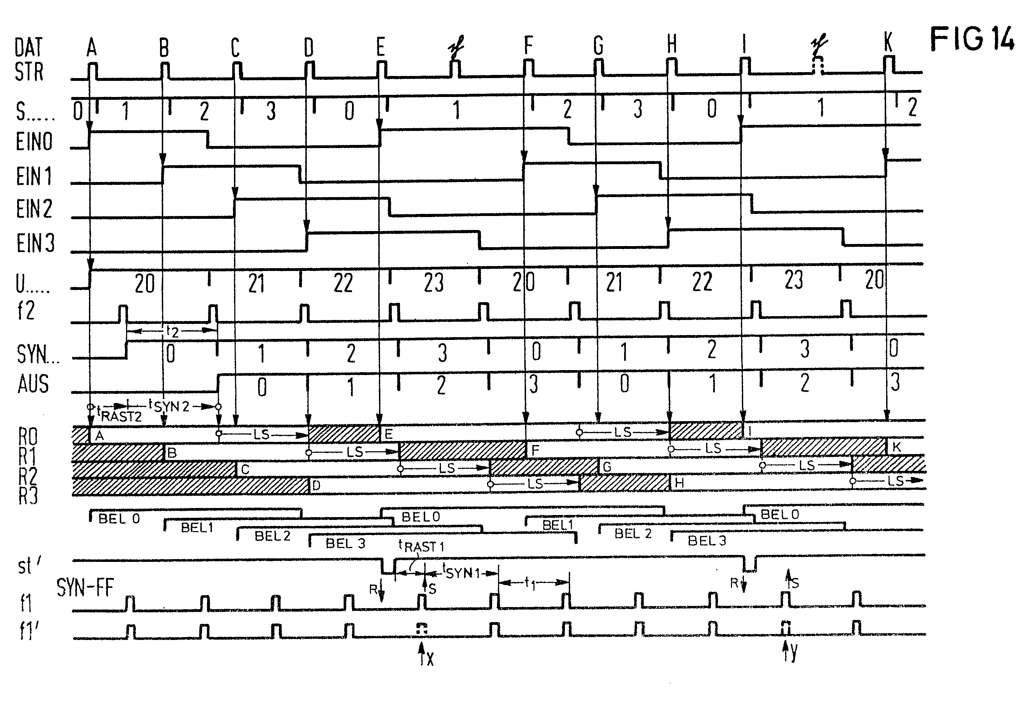

Fig. 14 zeigt das zugehörige Impulsdiagramm, wobei in Anlehnung an Fig. 4 wiederum vorausgesetzt wird, daß die Strobeimpulse STR den Taktimpulsen im Taktraster f1 und den einsynchronisierten Anforderungsimpulsen f1' jeweils um eine halbe Taktperiode t1 nacheilen. Mit den einlaufenden Strobeimpulsen STR werden die einzelnen Startflipflops S0 bis S3 zyklisch nacheinander wirksam und setzen die ihnen jeweils nachgeschalteten Eingabeschaltglieder EIN0 bis EIN3, die über die UND-Glieder U20 bis U30 zyklisch die Synchronisierflipflops SYN0 bis SYN3 starten. Von diesen werden nach einer Verzögerung von einer Taktperiode $t_2$ jeweils die Ausgabeschaltglieder AUS0 bis AUS3 für die Dauer einer Taktperiode $t_2$ gesetzt, die die Dauer der Weiterleitung eines Datenwortes DAT mit dem Lesesignal LS markieren. Unterhalb dieser Impulsfolgen sind die Belegungen der einzelnen Register R0 bis R3 mit den aufeinanderfolgenden Datenwörtern A bis K angegeben, wobei mit LS jeweils die Weiterleitungsperiode je Datenwort DAT gekennzeichnet ist und die belegungsfreien Zeiträume schraffiert sind.

Jedes der Datenwörter DAT wird danach sofort in eines der Register R0 bis R3 übernommen. Die Weiterleitungsperioden (LS) folgen ohne Unterbrechung aufeinander, so daß am Pufferausgang ein kontinuierlicher Datenfluß gegeben ist, ohne daß die Gefahr irgendeines Datenverlustes infolge auftretender metastabiler Zustände der beteiligten Kippstufen durch Signalverschneidungen besteht. Gleichzeitig wird die Datenflußrate auf der Eingabeseite des Pufferspeichers PUF selbständig an die maximale Datenflußrate auf der Ausgangsseite angepaßt. Letzteres erfolgt im Rahmen der Synchronisierschaltung SYN1 durch die invertierten Ausgangssignale der Belegungsschaltglieder BEL0 bis BEL3, deren Schaltzustände unterhalb der Registerzeilen R0 bis R3 dargestellt sind.

Solange nicht alle Belegungsschaltglieder BEL0 bis BEL3 gesetzt sind, ist im Puffer noch Platz zur Aufnahme eines Datenwortes vorhanden und das Steuersignal st' zeigt den Freizustand an mit der Folge, daß nach Setzen des Synchronisierflipflops SYN-FF jeder Taktimpuls im Taktraster f1 zu einem Anforderungsimpuls f1' wird. Sind aber, wenn auch nur kurzzeitig, alle Register belegt, zum Beispiel mit der Übergabe des Datenwortes E, dann wird das Synchronisierflipflop SYN-FF augenblicklich zurückgesetzt, und der nächste Taktimpuls im Taktraster f1 des abgebenden Systems führt nicht zu einem Anforderungsimpuls, zum Beispiel zu den Zeitpunkten X und Y, da das Synchronisierflipflop SYN-FF erst wieder gesetzt werden muß. Infolgedessen kann in der jeweils angelaufenen Taktperiode $t_1$ kein Stroberimpuls STR folgen. Es entsteht daher im Datenzufluß eine Datenwortlücke, die in der obersten Zeile jeweils durch ein sf gekennzeichnet ist. Der Pufferspeicher kann also niemals überlaufen.

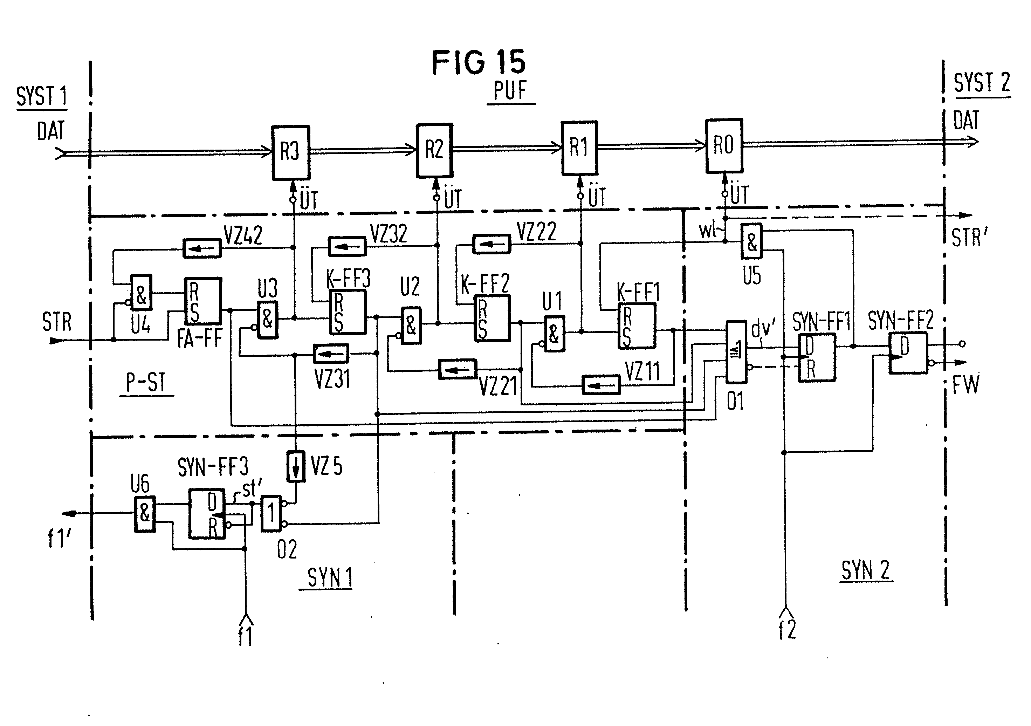

Fig. 15 zeigt ein weiteres, weniger aufwendiges Ausführungsbeispiel eines Pufferspeichers PUF mit Steuerung P-ST zusammen mit den beiden Synchronisierschaltungen SYN1 und SYN2. Dieser Pufferspeicher weist ebenfalls vier Einzelregister R0 bis R3 auf, die abweichend vom vorhergehenden Ausführungsbeispiel von den vom abgebenden System SYST1 angelieferten Datenwörtern DAT nacheinander und zwar in umgekehrter Reihenfolge durchlaufen werden. Die ersten drei Einzelregister R3 bis R1 bilden einen asynchron arbeitenden « Nachziehpuffer », bei dem die Datenwörter DAT schrittweise nacheinander innerhalb kurzer Zeit bis zu dem Einzelregister weitergeleitet werden, das gerade frei ist. Das letzte Einzelregister R0 der Reihenschaltung arbeitet als Synchron- oder Einphasungsregister für das aufnehmende System SYST2 abhängig von der Synchronisierschaltung SYN2.

Die Aufnahme und Weiterleitung der einzelnen Datenwörter DAT erfolgt wiederum durch die Steuerung P-ST, die das jeweils mitgelieferte Strobesignal STR auswertet. Innerhalb dieser Steuerung P-St ist jedem der asynchron arbeitenden Register R1 bis R3 ein Kontrollschaltglied, z. B. in Form einer RS-Kippstufe K-FF1 bis K-FF3, zugeordnet, das gesetzt wird, wenn in dem zugehörigen Einzelregister ein Datenwort zwischengespeichert wird. Jedem Setzeingang der Kontrollschaltglieder K-FF1 bis K-FF3 ist eines der UND-Glieder U1 bis U3 vorgeschaltet, deren invertierter zweiter Signaleingang jeweils mit dem Setzausgang des zugehörigen Kontrollschaltgliedes über eines der Verzögerungsglieder VZ11 bis VZ31 verbunden ist, während vom Ausgang dieser UND-Glieder neben dem Setzsignal für das zugehörige Kontrollschaltglied K-FF... ein durch jeweils eines der Verzögerungsglieder VZ22 bis VZ32 verzögertes Rücksetzsignal für das jeweils vorgeordnete Kontrollschaltglied K-FF... abgegriffen wird. Die drei Kontrollschaltglieder K-FF1 bis K-FF3 bilden also eine Reihenschaltung, die durch einen Strobeimpuls STR nacheinander gesetzt und mit Weiterleitung des im zugehörigen Register zwischengespeicherten Datenwortes jeweils wieder zurückgesetzt werden. Die Übernahmetakte ÜT für die Register sind dabei identisch mit den Setzsignalen für das jeweils zugehörige Kontrollschaltglied K-FF...

Dem ersten UND-Glied U3 dieser Reihenschaltung ist aus Sicherheitsgründen noch eine nicht immer erforderliche RS-Kippstufe als Fangflipflop FF-FA vorgeschaltet, das über ein an den Ausgang des UND-Gliedes U3 angeschlossenes Verzögerungsglied 42 und ein UND-Glied 4 zur Sperrung der Rücksetzung, solange der Eingangsstrobeimpuls STR noch wirksam ist, zurückgesetzt werden kann.

Die Setzausgänge aller Kontrollschaltglieder K-FF1 bis K-FF3 und des Eingangsflipflops FA-FF werden über ein ODER-Glied 01 zusammengefaßt, dessen Ausgangssignal dv' dem das Vorliegen von zwischengespeicherten Daten anzeigenden und bereits gefangenen Steuersignal dv entspricht, das von der Synchronisierschaltung SYN2 in das Taktraster f2 des aufnehmenden Systems SYST2 einzusynchronisieren ist und zum Signal wl als Übernahmetakt ÜT für das Synchronregister R0 führt. Die Synchronisierschaltung besteht im vorliegenden Fall allein aus dem Synchronisierflipflop SYN-FF1 und dem nachgeschalteten UND-Glied U5, da die vorgeschalteten RS-Kippstufen bereits die Funktion des Fangflipflops erfüllen und die Verzögerungszeit $t_{SYN2}$ entspricht wiederum der Taktperiode $t_2$. Das ODER-Glied 01 stellt dabei sicher, daß insbesondere bei noch größeren Einsynchronisierzeiten die Weiterleitung von zwischengespeicherten Datenwörtern kontinuierlich im Taktraster des aufnehmenden Taktsystems f2 erfolgen kann, ohne daß Lücken im Datenfluß entstehen, weil die gesamte Einsynchronisierzeit im letzten asynchronen Register R1 der Reihe abzuwarten ist. Mit dem Synchronisierflipflop SYN-FF1 ist ein weiteres Synchronisierflipflop SYN-FF2 in Reihe geschaltet, das ebenfalls mit der Rückflanke der Taktimpulse des Weiterleitungstaktrasters f2 getaktet wird und das anzeigt, ob ein Datenwort zur Weiterleitung gelangt oder nicht. Dieses kann in einigen Anwendungsfällen wiederum dazu benutzt werden, daß beim Fehlen weiterzuleitender Datenwörter aufgrund des Signales FW Füllwörter in den Datenstrom eingeblendet werden. Außerdem kann vom Weiterleitungssignal wl ein dem Eingangsstrobesignal STR entsprechendes Ausgangsstrobesignal STR' abgeleitet werden, falls erforderlich.

Das Steuersignal st für die Steuerung der Synchronisierschaltung SYN1 auf der Eingabeseite des Pufferspeichers wird in analoger Weise wie beim vorangehenden Ausführungsbeispiel gemäß Fig. 13 vom Belegungszustand des Pufferspeichers PUF abgeleitet, wobei im vorliegenden Fall allein der Setzzustand des ersten Kontrollschaltgliedes K-FF3 der Kette maßgebend ist, dessen Setzausgangssignal invertiert wird und als bereits gefangenes Steuersignal st' das Synchronisierflipflop SYN-FF3 der Synchronisierschaltung SYN1 steuert. Um zu verhindern, daß bereits ein bloßes Durchlaufen des zugehörigen Registers R3 das Synchronisierflipflop SYN-FF3 zurücksetzt, wird das Setzausgangssignal durch die Verzögerungsglieder VZ31 und VZ5 außerdem verzögert und ebenfalls invertiert mit dem unverzögerten Setzausgangssignal über ein ODER Glied 02 zum Steuersignal st' zusammengefaßt. Die Verzögerung ist dabei so bemessen, daß das verzögerte Signal erst wirksam wird, wenn normalerweise das unverzögerte Signal wieder abgeklungen ist und daher eine kurzzeitige Unterbrechung des unverzögerten Signales für eine vorgegebene Zeitdauer vom verzögerten Signal überbrückt wird. Erst wenn nach Ablauf dieser Zeitdauer die Unterbrechung des unverzögerten Signales noch nicht beendet ist, wird das Synchronisierflipflop SYN-FF3 zurückgesetzt und damit in die normale Datenzuflußsteuerung eingegriffen.

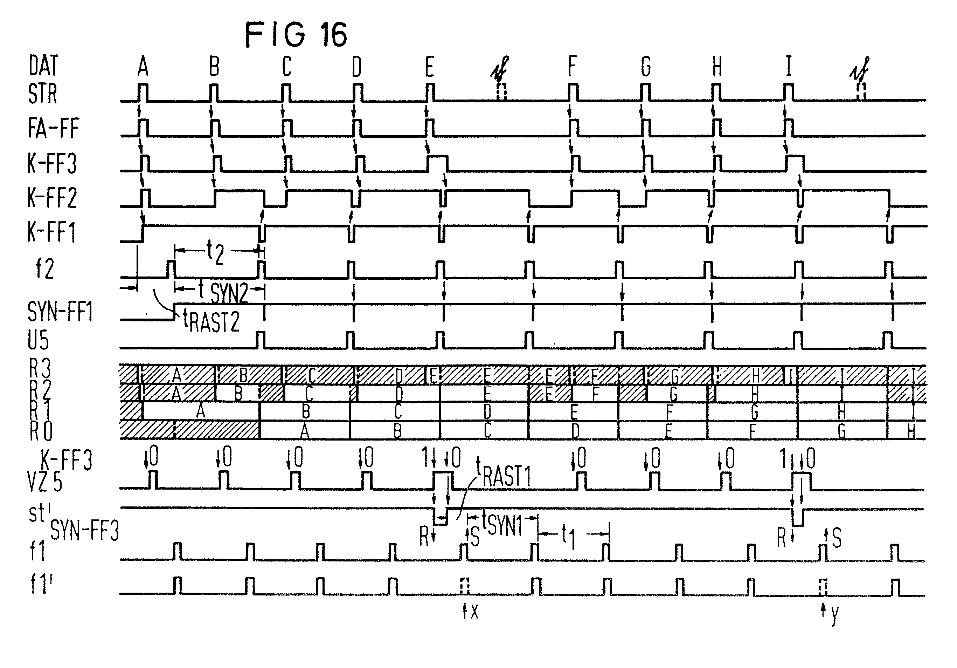

Fig. 16 zeigt das zugehörige Impulsdiagramm, das ähnlich dem von Fig. 14 aufgebaut ist. Einlaufende Strobeimpulse STR setzen nacheinander das Fangflipflop FA-FF und die nachfolgenden Kontrollschaltglieder K-FF3 bis K-FF1, wenn keines des Register R3 bis R1 belegt ist. Entsprechend wird ein angeliefertes Datenwort DAT, zum Beispiel A, nacheinander über die Register R3 und R2 ins Register R1 schrittweise weitergeleitet, wo es zunächst gespeichert bleibt, bis es nach Einrasten und Ablauf der Teilzeit $t_{SYN2}$ ins letzte Register R0 zur Weiterleitung übernommen wird. Mit der Weitergabe eines Datenwortes DAT an das nachfolgende Register werden die zugehörigen Kontrollschaltglieder, z. B. K-FF3 und K-FF2 wieder zurückgesetzt, so daß bei freiem nachfolgendem Register die Kontrollschaltglieder jeweils nur kurzzeitig gesetzt sind. Bei mehreren aufeinanderfolgenden Datenwörtern z. B. A bis E, gehen die Kontrollschaltglieder nacheinander in einen länger andauernden Setzzustand über, mit der Folge, daß nach Übergabe des Datenwortes E das Kontrollschaltglied K-FF3 noch gesetzt ist, wenn über das Verzögerungsglied VZ5 das verzögerte Ausgangssignal wirksam wird, so daß das Steuersignal st' unterbrochen und damit das Synchronisierflipflop SYN-FF3 zurückgesetzt wird. Die Folge ist wie beim Ausführungsbeispiel nach Fig. 13 eine Unterdrückung des möglichen Anforderungsimpulses f1' zum Zeitpunkt X und damit eine Unterdrückung des Strobeimpulses STR im laufenden Taktzyklus, was in der ersten Zeile wiederum durch ein sf gekennzeichnet ist.

Die beiden anhand von Fig. 13 und 15 erläuterten Ausführungsbeispiele stellen im Vergleich zu den anhand von Fig. 1 bis Fig. 3 erläuterten Lösungsvarianten Sonderfälle dar, die insbesondere geprägt sind von der zumindest teilweisen Integration der Synchronisierschaltungen SYN1 und SYN2 in die Steuerung P-ST des Pufferspeichers PUF, wobei beim Ausführungsbeispiel gemäß Fig. 13 zugleich von einer Vervielfältigung der Synchronisieranordnungen entsprechend der Anordnung von Fig. 9 und beim Ausführungsbeispiel gemäß Fig. 15 von einer Reihenschaltung von Fangflipflops entsprechend der Anordnung von Fig. 11 in Form der in Reihe geschalteten Kontrollschaltglieder K-FF... für die Synchronisierschaltung SYN2 Gebrauch gemacht wird. Andererseits verhindert die augenblickliche Rücksetzung des Synchronisierflipflops SYN-FF in der Synchronisierschaltung SYN1 bei gefülltem Pufferspeicher eine Reservierung von freien Registern, was sonst infolge der Verzögerung auch der Rückflanke des Steuersignals st notwendig wäre. Diese Verzögerung der Rückflanke kann bedenkenlos entfallen, da die Rückflanke des Steuersignales st' bereits synchron mit dem Taktraster f1 entsteht. Andererseits wird die Verzögerung der jeweils neu einsynchronisierten Vorderflanke des Steuersignals st' offensichtlich, da im vorliegenden Fall bei $t_{SYN} = t_1$ ungünstigstenfalls bis zu zwei Taktperioden $t_1$ vergehen können, bis das nächste Datenwort, z. B. F oder K, angeliefert wird. Diese Reaktionszeit fällt aber nicht weiter ins Gewicht, wenn noch genügend Datenwörter zwischengespeichert sind, so daß der kontinuierliche Datenfluß am Ausgang der Pufferspeichers nicht gefährdet ist.

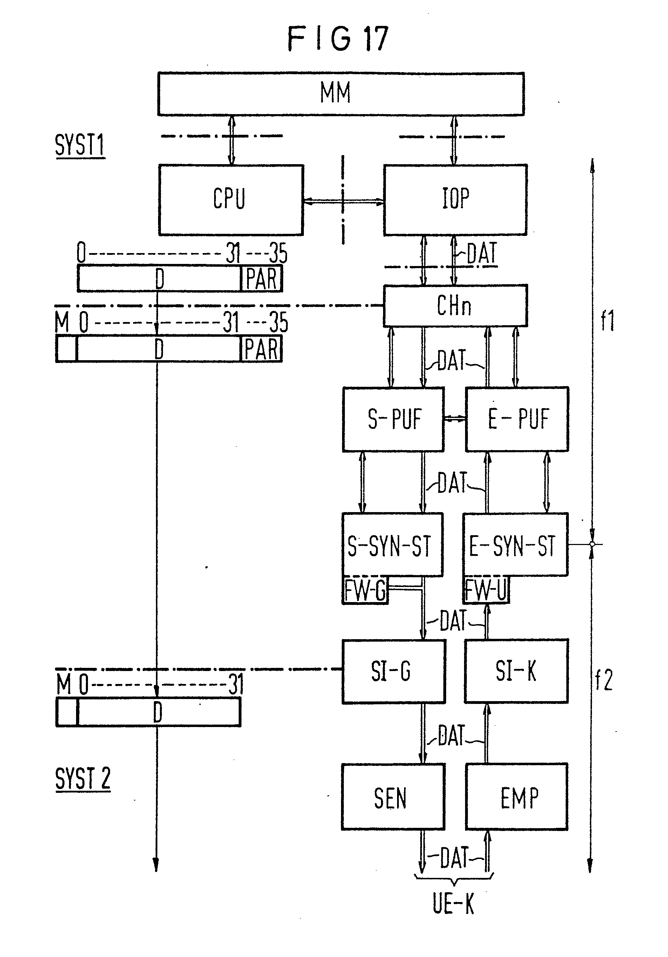

Fig. 17 zeigt schließlich, z. B. in Anlehnung an US-PS 3.680.051, das Blockschaltbild eines das abgebende System SYST1 bildenden Rechners mit Zentraleinheit CPU, Hauptspeicher MM und Ein-/Ausgabewerk IOP, das über eine angeschlossene Kanalsteuerung CHn mit einer Sende- und Empfangssteuereinheit eines beidseitig gerichteten Übertragungskanales UE-K als aufnehmendes System SYST2 mit unabhängigem Taktsystem f2 verbunden ist, das zum Beispiel die Verbindung zu einem weiteren, nicht gezeigten Rechner herstellt. Schnittstelle zwischen den beiden verschiedenen, asynchron arbeitenden Taktsystemen f1 und f2 sind die vorangehend beschriebenen und hier mit S-SYN-ST und E-SYN-ST bezeichneten Anordnungen für den Sende- und Empfangsweg. Abgehend werden die von der Kanalsteuerung CHn angelieferten Datenwörter DAT aufgrund der mitgelieferten Steuersignale zunächst in einen Sendepuffer S-PUF eingeschrieben und von dort durch die Synchronisiersteuerung S-SYN-ST mit Füllwortgenerator FW-G einem Sicherungsgenerator SI-G zugeleitet, der anstelle der bis zu diesem Punkt im Übertragungsweg verwendeten Paritätssicherung PAR innerhalb jedes Datenwortes DAT eine Blocksicherung in bekannter Art durchführt. Die gesicherten Datenblöcke werden dann zeichenweise dem Sender SEN zugeleitet, und nach einer Parallel/Serienumsetzung z. B. einem optischen Träger aufmoduliert und über den Übertragungskanal UE-K ausgesendet.

Umgekehrt werden über den Übertragungskanal UE-K eintreffende und im Empfänger EMP demodulierte Zeichen nach einer Serien-/Parallelumsetzung der Sicherungskontrolleinrichtung SI-K zugeführt, die die Datenwörter mit Paritätssicherung über eine Füllwortunterdrückungsanordnung FW-U an die Synchronisiersteuerung E-SYN-ST weiterleitet. Von dort werden die Datenwörter DAT synchron mit dem Taktsystem f1 des aufnehmenden Rechnersystems SYST1 an einen Empfangspuffer E-PUF geleitet, aus dem die Kanalsteuerung CHn sie nach Bedarf abholt und dem mikroprozessorgesteuerten Ein-/Ausgabewerk IOP zur Verfügung stellt.

Die Formate der zwischen den einzelnen Einrichtungen zu übertragenden Datenwörter DAT sind im linken Teil der Fig. 17 angegeben. Die Datenwörter werden zum Beispiel mit einer Breite von 36 Bit angeliefert, wobei 32 Bit die eigentliche Information D beinhalten und 4 Bit zur Paritätssicherung PAR dienen. Aufgrund der parallel mitgelieferten Steuerinformationen werden in der Kanalsteuerung CHn daraus 37 Bit durch Voranstellen eines Merkbits M, das gegebenenfalls anzeigt, daß die zugehörige Information D auf der Empfangsseite nicht in einen Streamingvorgang einbezogen werden darf, weil damit eine Programmunterbrechung des aufnehmenden Ein/Ausgabewerkes IOP verbunden ist, zum Beispiel bei Blockendemarkierungen usw.

Die Einschaltung des Sendepuffers S-PUF bzw. des Empfangspuffers E-PUF in den Datenübertragungsweg ist dabei von besonderer Bedeutung, da er als Bindeglied zum Rechner den unterschiedlichen Steuerungsbedingungen von Rechner und Übertragungssystem Rechnung trägt, die sich im wesentlichen darin unterscheiden, daß der Übertragungskanal kontinuierlich arbeitet, der Rechner dagegen eine Vielzahl von Aufgaben zu erledigen hat und daher nur zeitweise für den Übertragungskanal zur Verfügung steht, wobei Daten nicht nur einzeln, sondern überwiegend im sogenannten Streaming abgegeben bzw. abgeholt werden. Das heißt, eine jeweils vorgegebene Anzahl von Datenwörtern DAT wird während aufeinanderfolgender Arbeitszyklen kontinuierlich und damit mit einer höheren Übertragungsrate als die des Übertragungskanals UE-K weitergeleitet. Das erfordert einerseits eine enge Kopplung dieser Pufferspeicher über die Kanalsteuerung CHn mit dem Ein-/Ausgabewerk IOP, um Zeitprobleme beim Einsynchronisieren zu umgehen, und andererseits eine ausreichende Speicherkapazität.

Die dafür vielfach verwendeten Wechselpuffer, die abwechselnd gefüllt und entleert werden, sind in vielen Fällen, z. B. wegen der Bindung an eine vorgegebene Blocklänge und wegen der mit der Umsteuerung verbundenen Probleme, nicht besonders geeignet. Vorteilhafter sind Einzelpuffer ausreichender Kapazität mit festgelegten abwechselnden Schreib- und Lesezyklen, wobei die Pufferkapazität in Verbindung mit der Synchronsteuerung sogar niedriger als sonst bemessen sein kann, da bereits während der Eingabe wieder ausgespeichert werden kann und der Pufferspeicher nur die Differenz zwischen Quellen- und Verarbeitungsdatenrate ausgleichen muß. Außerdem wirken sich zusätzlich aufzunehmende Steuer- und Verwaltungsinformationen weniger störend aus.

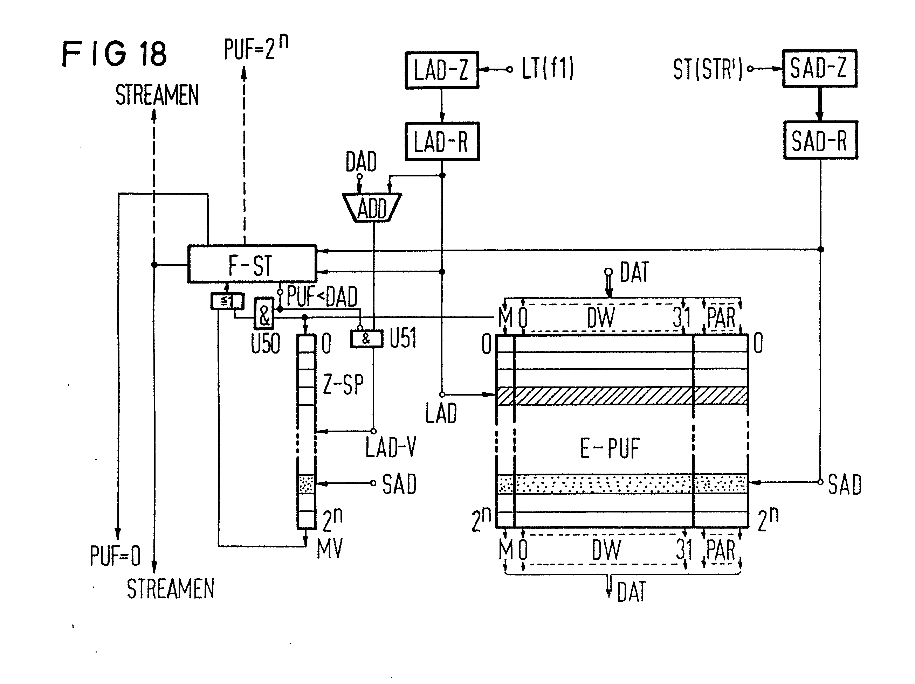

Das Blockschaltbild eines derartigen Pufferspeichers, und zwar als Empfangspuffer E-PUF, ist in Fig. 18 gezeigt. Die einzelnen Speicherabschnitte 1 bis $2^n$ des Empfangspuffers E-PUF werden zum Einschreiben über einen durch den Stroboimpuls STR' gebildeten Schreibtakt ST gesteuerten Schreibadressenzähler SAD-Z mit dem Schreibadressenregister SAD-R und zum Lesen über einen durch die Taktimpulse des aufnehmenden Taktsystems f1 gebildeten Lesetakt LT gesteuerten Leseadressenzähler LAD-Z mit dem Leseadressenregister LAD-R angesteuert. Eine Füllsteuerung F-ST überwacht dabei in an sich bekannter Weise anhand der Schreibadresse SAD und der Leseadresse LAD durch Differenzbildung den Füllungsstand des Pufferspeichers und leitet daras die benötigten Steuersignale für die angeschlossene Kanalsteuerung CHn ab. Es handelt sich dabei in erster Linie um die Steuersignale PUF = 0 entsprechend SAD − LAD = 0 für « Puffer leer » PUF = $2^n$ entsprechend SAD − LAD = $2^n$ für « Puffer voll » $\overline{\text{STREAMEN}}$ entsprechend SAD − LAD < DAD für « nicht streamen ».

Außerdem sind die gespeicherten Datenwörter DAT auf vorliegende Markierungen durch das Merkbit M zu überwachen, da diese nicht in einen Streaming-Vorgang einbezogen werden dürfen. Die Überwachung darf daher nicht erst beim Lesen erfolgen, denn dann könnte ein Streaming-Vorgang bereits eingeleitet sein, sondern sie muß entsprechend vorher erfolgen. Dazu ist ein Zusatzspeicher Z-SP vorgesehen, in dem die Merkbits M der einzuspeichernden Datenwörter zusätzlich unter der jeweils aktuellen Schreibadresse SAD eingeschrieben werden. Gelesen werden sie dagegen mit einer, der aktuellen Leseadresse LAD um eine einer Streaming-Einheit entsprechenden Distanzadresse DAD voreilenden Leseadresse LAD-V, die aus der im Leseadressenregister LAD-R enthaltenen Leseadresse und der Distanzadresse DAD durch einen Addierer ADD gebildet wird. Das so jeweils vorauseilend gelesene Merkbit MV erscheint dann beim Lesen immer so rechtzeitig, daß ein gerade laufender Streaming-Vorgang auf jeden Fall noch zu Ende geführt werden kann, bevor die Markierung M am Ausgang des Empfangspuffers E-PUF erscheint.

Mit jedem voreilend gelesenen Merkbit MV wird in der Füllsteuerung F-ST ein Zählvorgang ausgelöst, der eine der DAD entsprechenden Anzahl von Lesevorgängen des Empfangspuffers E-PUF umfaßt. Erst wenn dieser Zählvorgang beendet ist, wird das Streaming-Verbotssignal STREAMEN wieder zurückgenommen. Da innerhalb eines möglichen Streaming-Abschnittes mehrere Merkbits auftreten können, wird bei jedem voreilend gelesenen Merkbit MV der Zählvorgang erneut gestartet.

Der Zählvorgang kann in an sich bekannter Weise durch einen entsprechend voreinstellbaren Zähler gesteuert werden, der mit jedem voreilend gelesenen Merkbit MV voreingestellt und mit jedem Lesevorgang des Empfangspuffers E-PUF um einen Schritt zurückgestellt wird. Solange sich der Zähler nicht in der Nullstellung befindet, erscheint das Streaming-Verbotssignal STREAMEN.

Da andererseits bei einer Pufferfüllung SAD-LAD < DAD entsprechend PUF < DAD sowieso kein Streaming-Vorgang ablaufen kann, und andererseits ein Vorlesen bei störungsfreiem Lesen zu Fehlern führen kann, führt in diesem Falle ein Merkbit M über das UND-Glied U50 unmittelbar zur Auslösung des Zählvorganges, und das voreilende Lesen des Zusatzspeichers Z-SP wird über das UND-Glied 51 gesperrt.

Für die nachfolgende Empfangsseite des Kanalsteuerung CHn sind dabei in erster Linie die Steuersignale PUF = 0 und STREAMEN von Bedeutung, so daß Datenwörter DAT im Einzelschrittverfahren bei $\overline{\text{PUF}}$ = 0 mit $\overline{\text{STREAMEN}}$ oder aber im Streaming-Verfahren bei $\overline{\text{PUF}}$ = 0 mit STREAMEN abgezogen werden können.

Bei Verwendung des Puffers als Sendepuffer S-PUF sind die entgegen dem Datenfluß gerichteten, gestrichelten Steuersignale PUF = $2^n$ und STREAMEN für die Sendeseite der Kanalsteuerung CHn in erster Linie von Bedeutung, um anzuzeigen, daß bei überlaufendem Puffer vorerst nicht mehr gesendet werden darf und ob im Streaming-Verfahren gesendet werden darf. In diesem Falle wird das Signal $\overline{\text{STREAMEN}}$ dann ausgelöst, wenn gerade noch ein für ein Streaming-Paket reichender Speicherbereich frei ist, also SAD − LAD = DAD ist, so daß bei $\overline{\text{PUF}} = 2^n$ mit STREAMEN im Streaming-Verfahren, bei $\overline{\text{PUF}} = 2^n$ mit $\overline{\text{STREAMEN}}$ nur noch im Einzelschrittverfahren und bei PUF = $2^n$ kein Datenwort mehr angeliefert werden darf.

Der Schreibtakt ST wird in diesem Falle durch das mitgelieferte Strobesignal STR und der Lesetakt LT durch die Taktimpulse des Taktrasters f2 des Übertragungssystems gebildet. Auf den in Fig. 18 gezeigten Zusatzspeicher Z-SP einschließlich der zugehörigen Steuerung für das voreilende Lesen des Merkbits M kann außerdem verzichtet werden.

Insgesamt läßt sich so die Übertragungseinrichtung gemäß der Erfindung sehr wirkungsvoll in die Kopplung zweier Rechner einbeziehen.

**Patentansprüche**

1. Datenübertragungseinrichtung zwischen zwei asynchron gesteuerten Datenverarbeitungssystemen (SYST1 und SYST2) mit einem aus mehreren Speicherabschnitten zur Zwischenspeicherung je eines Datenwortes (DAT) aufgebauten Pufferspeicher (PUF) sowie zwei Steuereinrichtungen, von denen die eine als Eingabesteuerung synchron mit dem Systemtakt (f1) des datenabgebenden Systems (SYST1) die Übergabe jeweils eines Datenwortes (DAT) in einen für die Übernahme zur Verfügung stehenden Speicherabschnitt des Pufferspeichers (PUF) und die andere als Ausgabesteuerung synchron mit dem Systemtakt (f2) des datenaufnehmenden Systems (SYST2) die Weiterleitung jeweils eines Datenwortes (DAT) aus einem für die Ausgabe zur Verfügung stehenden Speicherabschnitt des Pufferspeichers (PUF) an das datenaufnehmende System (SYST2) steuert, dadurch gekennzeichnet, daß eine Pufferspeichersteuerung (P-ST) vorgesehen ist, die den Füllungszustand des Pufferspeichers (PUF) überwacht und bei Zwischenspeicherung eines Datenwortes (DAT) ein entsprechendes Steuersignal (dv) erzeugt, das einer der Ausgangsseite zugeordneten Synchronisierschaltung (SYN2) zugeführt wird, die wiederum das Steuersignal (dv) unter Vermeidung von logisch nicht definierten Zwischenzuständen im Daten- und Steuerpfad in das Taktraster (f2) des aufnehmenden Systems (SYST2) einsynchronisiert und dadurch verzögert (mit wl) die Weiterleitung eines Datenwortes (DAT) auslöst, daß ein vom Weiterleitungstaktraster (f2) abhängiges Steuersignal (st) für eine der Eingabeseite zugeordnete Synchronisierschaltung (SYN1) erzeugt wird, das ebenfalls unter Vermeidung von logisch nicht definierbaren Zwischenzuständen im Daten- und Steuerpfad in das Taktraster (f1) des abgebenden Systems (SYST1) einsynchronisiert wird und dadurch verzögert (mit f1') die Übergabe eines Datenwortes (DAT) zusammen mit einem die Aufnahme in den Pufferspeicher steuernden Strobesignal (STR) auslöst und daß der Pufferspeicher (PUF) wenigstens drei Speicherabschnitte (z. B. Register R0 bis R2) aufweist, nämlich einen zur Bereitstellung des aus dem Pufferspeicher (PUF) weiterzuleitenden Datenwortes (DAT), einen zur Überbrückung der Einsynchronisierzeit ($t_{SYN2}$) vor dem Weiterleiten und einen zur Überbrückung der Einrastzeit ($t_{RAST2}$) einer Zwischenspeicheraufforderung (mit STR) in das Taktraster (f2) des aufnehmenden Systems (SYST2).

2. Datenübertragungseinrichtung nach Anspruch 1, dadurch gekennzeichnet, daß das Steuersignal (st) für die der Eingabeseite zugeordnete Synchronisierschaltung (SYN1) in Verbindung mit jedem Taktimpuls des Weiterleitungstaktrasters (f2) ausgelöst wird.

3. Datenübertragungseinrichtung nach Anspruch 2, dadurch gekennzeichnet, daß das Steuersignal (st) dem jeweiligen Taktimpuls des Weiterleitungstaktrasters (f2) jeweils um die durch die der Ausgabeseite zugeordnete Synchronisierschaltung (SYN2) bedingte Verzögerungszeit ($t_{SYN2}$) vorauseilt.

4. Datenübertragungseinrichtung nach Anspruch 3, dadurch gekennzeichnet, daß die Verzögerungszeit ($t_{SYN2}$) dem ganzzahligen

Vielfach der Taktperiodenzeit ($t_2$) des Weiterleitungstaktrasters (f2) entspricht und daß bei einer Verzögerungszeit ($t_{SYN2}$) größer als die Taktperiodenzeit ($t_2$) die Mindestanzahl von Speicherabschnitten (R...) im Pufferspeicher (PUF) entsprechend erhöht ist, um einen kontinuierlichen Datenfluß auf der Ausgabeseite zu ermöglichen.

5. Datenübertragungseinrichtung nach einem der Ansprüche 1 bis 4, dadurch gekennzeichnet, daß das Steuersignal (st) für die der Eingabeseite zugeordnete Synchronisierschaltung (SYN1) vom Vorhandensein wenigstens eines freien Speicherabschnittes (R...) des Pufferspeichers (PUF) abgeleitet wird (Signal frei) und daß das einsynchronisierte Steuersignal die während seiner wirksamen Dauer auftretenden Taktimpulse des Taktrasters (f1) des datenabgebenden Systems (SYST1) als Anforderungssignale für die aufeinanderfolgende Übergabe von Datenwörtern (DAT) freigibt.

6. Datenübertragungseinrichtung nach Anspruch 5, dadurch gekennzeichnet, daß sowohl die Vorder- als auch die Rückflanke des Freisignales (frei) durch die der Eingabeseite zugeordnete Synchronisierschaltung (SYN1) verzögert wird, daß die Mindestanzahl der Speicherabschnitte (R...) des Pufferspeichers (PUF) entsprechend der während der verzögerten Abklingzeit noch wirksam werdenden Taktimpulse des Taktrasters (f1) des datenabgebenden Systems (SYST1) um n Einzelregister erhöht ist und daß das Freisignal (frei) nur erzeugt wird, wenn wenigstens (n + 1) Einzelregister des Pufferspeichers noch frei sind.

7. Datenübertragungseinrichtung nach Anspruch 5, dadurch gekennzeichnet, daß lediglich die Vorderflanke des Freisignals (frei) durch die der Eingabeseite zugeordnete Synchronisierschaltung (SYN1) verzögert wird, während die Rückflanke augenblicklich wirksam wird und nachfolgende Taktimpulse des Taktrasters (f1) des datenabgebenden Systems (SYST1) als Anforderungssignale unterdrückt.

8. Datenübertragungseinrichtung nach einem der Ansprüche 2 bis 4 in Verbindung mit Anspruch 5, dadurch gekennzeichnet, daß unmittelbar mit dem Verschwinden des Freisignals (frei) die der Eingabeseite zugeordnete Synchronisierschaltung (SYN1) auf die in Verbindung mit jedem Taktimpuls des Weiterleitungstaktrasters (f2) abgegebenen Steuersignale (st) umgesteuert wird.

9. Datenübertragungseinrichtung nach einem der Ansprüche 2 bis 4, dadurch gekennzeichnet, daß die der Ausgabeseite zugeordnete Synchronisierschaltung (SYN2) jeweils erst dann freigegeben wird, wenn die für einen kontinuierlichen Datenfluß auf der Ausgabeseite erforderliche Mindestzahl von Speicherabschnitten (R...) im Pufferspeicher (PUF) mit Datenwörtern (DAT) belegt ist.

10. Datenübertragungseinrichtung nach einem der Ansprüche 1 bis 9, dadurch gekennzeichnet, daß die Synchronisierschaltung (SYN1 und SYN2) aus wenigstens einem Fang-Flipflop (FA-FF) und wenigstens einem rückflankengesteuerten Synchronisier-Flipflop (SYN-FF) bestehen, wobei das Fang-Flipflop (FA-FF) als RS-Flipflop das einzusynchronisierende Steuersignal (st bzw. dv) empfängt und das nachgeschaltete Synchronisier-Flipflop (SYN-FF) das Ausgangssignal des Fang-Flipflops (FA-FF) mit dem zuständigen Synchronisiertakt (f1 bzw. f2) übernimmt und um die Einsynchronisierzeit ($t_{SYN1}$ bzw. $t_{SYN2}$) verzögert über ein UND-Gatter (U1) als Übertragungstaktsignal (f1′ bzw. wl) weiterleitet.

11. Datenübertragungseinrichtung nach Anspruch 10, dadurch gekennzeichnet, daß zur Vermeidung von Anforderungsunterdrückungen bei zu schnell aufeinanderfolgenden Anforderungen (st = f2) wenigstens zwei Synchronisiereinheiten aus je einem Fang-Flipflop (FA-FF1 bzw. FA-FF2) und einem Synchronisier-Flipflop (SYN-FF1 bzw. SYN-FF2) mit UND-Gattern (U31 bzw. U32) vorgesehen sind, die zyklisch nacheinander über ein vorgeschaltetes Steuerschaltglied (z. B. eine rückflankengesteuerte Kippstufe T-FF) mit jedem eintreffenden und einzusynchronisierenden Steuersignal (st) wirksam geschaltet werden.

12. Datenübertragungseinrichtung nach Anspruch 10, dadurch gekennzeichnet, daß zur Vermeidung von Anforderungsunterdrückungen bei zu schnell aufeinanderfolgenden Anforderungen (st = f2) wenigstens zwei über jeweils ein UND-Gatter (U2) in Reihe geschaltete Fang-Flipflops (FA-FF1 und FA-FF2) vorgesehen sind, wobei der zweite Signaleingang jedes UND-Gatters (U2) der Reihenschaltung über ein Verzögerungsglied (VZ1) vom Ausgang des nachfolgenden Fang-Flipflops (FA-FF1) her sperrbar ist und das vorangehende Fang-Flipflop (FA-FF2) ebenfalls über ein Verzögerungsglied (VZ2) vom Ausgang des UND-Gatters (U2) der Reihenschaltung her rücksetzbar ist.

13. Datenübertragungseinrichtung nach einem der Ansprüche 10 bis 12, dadurch gekennzeichnet, daß die Fang-Flipflops (FA-FF) der Synchronisierschaltung (SYN1, SYN2) wenigstens zum Teil integraler Bestandteil der Steuerung (P-ST) des Pufferspeichers (PUF) sind.

14. Datenübertragungseinrichtung nach einem der Ansprüche 1 bis 13, dadurch gekennzeichnet, daß die Register (z. B. R0 bis R3) des Pufferspeichers (PUF) eine Reihenschaltung bilden, die von den Datenwörtern (DAT) des abgebenden Systems (SYST1) schrittweise nacheinander durchlaufen werden, wobei das jeweils im letzten Einzelregister (R0) zwischengespeicherte Datenwort synchron mit dem Systemtakt (f2) des aufnehmenden Systems (SYST2) an dieses weitergeleitet wird, daß bis auf das das Ausgabeende des Pufferspeichers (PUF) bildende Einzelregister (R0) der Reihenschaltung jedem Einzelregister (R3 bis R1) ein Kontrollschaltglied (K-FF1 bis K-FF3) zur Anzeige des Belegtzustandes des zugehörigen Einzelregisters (R3 bis R1) zugeordnet ist, daß diese Kontrollschaltglieder (K-FF1 bis K-FF3) über jeweils vorgeschaltete UND-Glieder (U2 bzw. U3 bzw. U4) zur Sperrung der Setzeingänge (S) ebenfalls eine Reihenschaltung bilden, wobei der Setzausgang jedes Kontrollschaltgliedes (z. B. K-FF1) mit dem invertierten zweiten Signaleingang des zugehörigen UND-Gliedes (z. B. U2) verbunden ist, daß die Übernahmetakte (ÜT) für die Einspeicherung eines Datenwortes in die jeweils zugehörigen Einzelregister (R3 bis R1) und die Rücksetzsignale für die jeweils vorgeschalteten Kontrollschaltglieder (K-FF1 und K-FF2) vom Ausgang des jeweils nachgeschalteten UND-Gliedes (U2 bis U4) der Reihenschaltung abgeleitet werden, so daß abhängig vom eintreffenden Strobesignal (STR) die Datenwörter (DAT) nacheinander schrittweise von Einzelregister zu Einzelregister unmittelbar an das dem Ausgabeende des Pufferspeichers (PUF) jeweils am nächsten liegende freie Einzelregister (z. B. R1) weitergeleitet werden und daß dem das Ausgabeende des Pufferspeichers (PUF) bildenden Einzelregister (R0) anstelle des Kontrollschaltgliedes ein rückflankengesteuertes Synchronisier-Flipflop (SYN-FF1) mit nachgeschaltetem UND-Glied (U5) zugeordnet ist, das abhängig vom vorangehenden Kontrollschaltglied (K-FF3) durch die Taktimpulse des Systemtaktes (f2) des aufnehmenden Systems (SYST2) getaktet wird und das nachgeschaltete UND-Glied (U5) für die um die Einsynchronisierzeit ($t_{SYN2}$) verzögert erfolgende Auslösung des Übernahmetaktes ÜT) für das letzte Einzelregister (R0) zur Weiterleitung eines Datenwortes (DAT) und für die Rücksetzung des vorangehenden Kontrollschaltgliedes (K-FF3) freigibt.

15. Datenübertragungseinrichtung nach Anspruch 15, dadurch gekennzeichnet, daß dem Synchronisier-Flipflop (SYN-FF1) ein ODER-Glied (01) vorgeschaltet ist und daß die Ausgänge aller vorangehenden Kontrollschaltglieder (K-FF1 bis K-FF3) und des Eingangsfangflipflops (FA-FF) mit je einem Signaleingang des ODER-Gliedes (01) verbunden sind.

16. Datenübertragungseinrichtung nach einem der Ansprüche 1 bis 13, dadurch gekennzeichnet, daß die Einzelregister (z. B. R0 bis R3) des Pufferspeichers (PUF) wahlweise zum Einschreiben und zum Lesen von Datenwörtern (DAT) angesteuert werden können, daß jedem Einzelregister (z. B. R0) eine vom Strobesignal (STR) rückflankengesteuerte Kippstufe (z. B. S0) mit nachgeschaltetem UND-Glied (z. B. U10) zugeordnet ist, wobei alle Kippstufen (S0 bis S3) ein Ringschieberegister zur Kennzeichnung des jeweils aufnehmenden Einzelregisters (R...) bilden und die Schreibsignale (SS) jeweils abhängig vom Setzzustand der Kippstufen und vom Vorliegen des Strobesignales (STR) vom Ausgang eines der UND-Glieder (U10 bis U13) abgeleitet werden, daß den UND-Gliedern (U10 bis U13) jeweils eine RS-Kippstufe als Eingabefangflipflop (EIN0 bis EIN3) zur Kennzeichnung von vorliegenden Leseaufträgen für den Pufferspeicher (PUF) nachgeordnet sind und

daß die Ausgänge der Eingabefangflipflops (EIN0 bis EIN3) über ein seriell arbeitendes Ausgabenetzwerk (UND-Glieder U20 bis U23) in der Reihenfolge ihres Wirksamwerdens individuell zugeordnete Synchronisierschaltungen (z. B. SYN0, U30, AUS0) wirksam schalten, die nach Ablauf der erforderlichen Einsynchronisierzeit ($t_{SYN2}$) abhängig vom Systemtakt (f2) des aufnehmenden Systems (SYST2) das Lesesignal (LS) für das zugehörige Einzelregister (z. B. R0) und ein Rücksetzsignal für das jeweils vorgeschaltete Fang-Flipflop (z. B. EIN0) liefern, wobei die Lesesignale (LS) für die Dauer einer ganzen Taktperiode ($t_2$) des bestimmenden Systemtaktes (f2) aufrechterhalten werden (durch Kippstufen AUS0 bis AUS3).

17. Datenübertragungseinrichtung nach Anspruch 16, dadurch gekennzeichnet, daß je Einzelregister (R0 bis R3) ein dessen Belegungszustand kennzeichnendes zusätzliches bistabiles Schaltglied (RS-Kippstufen BEL0 bis BEL3) vorgesehen ist, das mit dem Ansprechen des zugehörigen Eingabefangflipflops (EIN0 bis EIN3) gesetzt und im Gegensatz zu den Eingabefangflipflops erst am Ende der Lesedauer ($t_2$) wieder zurückgesetzt wird, und daß ein möglicherweise benötigtes und den Freizustand wenigstens eines Einzelregisters (R...) im Pufferspeicher (PUF) kennzeichnendes Steuersignal (st) über ein ODER-Glied (02) von den Signalausgängen der den Belegungszustand anzeigenden Schaltglieder (BEL0 bis BEL3) abgeleitet wird.

18. Datenübertragungseinrichtung nach einem der Ansprüche 14 bis 17, insbesondere zur Speisung eines das aufnehmende System bildenden Datenübertragungssystems, dadurch gekennzeichnet, daß zur Aufrechterhaltung eines kontinuierlichen Datenflusses am Ausgang des Pufferspeichers (PUF) bei fehlenden Datenwörtern (DAT) Füllwörter anstelle der Datenwörter in den Datenstrom für das aufnehmende System (SYST) eingeblendet werden und daß das Steuersignal (FW) für das Einblenden der Füllwörter unmittelbar vom invertierten Signal eines bzw. der die Sendeperiode ($t_2$) für die Datenwörter einleitenden Schaltglieder (SYN-FF2 bzw. AUS0 bis AUS3) abgeleitet wird.

19. Datenübertragungseinrichtung nach einem der Ansprüche 1 bis 18, insbesondere in Verbindung mit einem Rechner als datenabgebendes System, dadurch gekennzeichnet, daß dem Pufferspeicher (PUF) für die Einsynchronisierung ein elastischer Pufferspeicher (S-PUF) mit voneinander unabhängiger Ein- und Ausgabesteuerung vorgeschaltet ist, dessen Ausgabesteuerung von der Steuerung des Pufferspeichers für die Einsynchronisierung abhängig ist.

20. Datenübertragungseinrichtung nach Anspruch 19, insbesondere zur Kopplung zweier Rechnersysteme durch ein dazwischengeschaltetes Übertragungssystem mit durch einen Übertragungskanal verbundenen Sende- und Empfangseinrichtungen, das mit einem von den Systemtakten (f1) der beiden Rechnersysteme unabhängigen Systemtakt (f2) arbeitet, dadurch gekennzeichnet,
daß der Reihenschaltung von elastischem Pufferspeicher (S-PUF) und Pufferspeicher für die Einsynchronisierung (S-SYN-ST) auf den Systemtakt (f2) des Übertragungssystems vor der Sendeeinrichtung (SIG/SEN) der Sendeseite auf der Empfangsseite eine spiegelbildliche Anordnung der Reihenschaltung von Pufferspeicher (E-SYN-ST) für die Einsynchronisierung auf den Systemtakt (f1) des angeschlossenen Rechners und elastischem Pufferspeicher (E-PUF) nach der Empfangseinrichtung (EMP/SI-K) entspricht,

daß jeder nicht mit einem Füllwort zusammenfallende Taktimpuls des Übertragungstaktrasters (f2) zugleich als Strobesignal (STR) die unmittelbare Übernahme ankommender Datenwörter (DAT) in den Pufferspeicher (E-SYN-ST) für die Einsynchronisierung bewirkt und

daß in Verbindung mit der der Ausgabeseite dieses Pufferspeichers (E-SYN-ST) zugeordneten Synchronisierschaltung ein mit dem aufnehmenden Systemtakt (f2) taktsynchrones Steuersignal (STR') erzeugt wird, das die Übernahme des zur Weiterleitung bereitstehenden Datenwortes (DAT) im jeweils eingeleiteten Taktzyklus erzwingt.

21. Datenübertragungseinrichtung nach Anspruch 20, dadurch gekennzeichnet,
daß die vom datenabgebenden Rechner gelieferten Daten (DW), die beim aufnehmenden Rechner eine Programmunterbrechung bewirken, durch ein zusätzliches Merkbit (M) innerhalb des jeweils zu übertragenen Datenwortes (DAT) gekennzeichnet sind und in dieser Weise gekennzeichnete Datenwörter einzeln weitergeleitet werden, daß zur Verhinderung einer paketweisen Weiterleitung von im elastischen Pufferspeicher (E-PUF) auf der Empfangsseite gespeicherten Datenwörtern (DAT) an den aufnehmenden Rechner, wenn innerhalb eines solchen Paketes eines der Datenwörter (DAT) durch ein zusätzliches Merkbit (M) markiert ist, beim Einschreiben der so gekennzeichneten Datenwörter in den elastischen Pufferspeicher (E-PUF) in einen Zusatzspeicher (Z-SP) des elastischen Pufferspeichers (E-PUF) unter derselben Schreibadresse (SAD) ein Zusatzkennzeichen (MV) abgespeichert wird, daß dieser Zusatzspeicher (Z-SP) bei jedem Lesevorgang für den elastischen Pufferspeicher (E-PUF) mit einer Adresse (LAD-V) zum Lesen angesteuert wird, die gegenüber der aktuellen Leseadresse (LAD) für den elastischen Pufferspeicher (E-PUF) um eine die Paketlänge kennzeichnende Distanzadresse (DAD) erhöht ist, wenn wenigstens ein Paket gespeichert ist, und daß durch jedes gelesene Zusatzkennzeichen (MV) bzw. durch jedes in den Pufferspeicher (E-PUF) eingeschriebene Merkbit (M), wenn weniger als ein Paket gespeichert ist (PUF < DAD), ein Zählvorgang mit einer der Distanzadresse (DAD) entsprechenden Anzahl (z. B. 8) von Zählschritten eingeleitet und während jedes laufenden Zählvorganges ein Sperrsignal (STREAMEN) zur Verhinderung des paketweisen Abrufes der im elastischen Pufferspeicher (E-PUF) gespeicherten Datenwörter (DAT) durch den aufnehmenden Rechner erzeugt wird.

## Claims

1. A device for transmitting data between two asynchronously controlled data processing systems (SYST1 and SYST2), with a buffer store (PUF) which comprises a plurality of storage sections each for the intermediate storage of a data word (DAT), and with two control devices, one of which, serving as input control unit, in synchronism with the clock signal (f1) of the data emitting system (SYST1), controls the transfer of a data word (DAT) into a storage section of the buffer store (PUF) which is available for the transfer, and the other of which, acting as output control unit, in synchronism with the clock signal (f2) of the data receiving system (SYST2), controls the forwarding of a data word (DAT) from a storage section of the buffer store (PUF), available for the output, to the data receiving system (SYST2), characterised in that a buffer store control unit (P-ST) is provided which monitors the level of fullness of the buffer store (PUF) and, when a data word (DAT) is intermediately stored, produces a corresponding control signal (dv) which is fed to a synchronising circuit (SYN2) which is assigned to the output end and which, avoiding logically non-defined intermediate states in the data- and control path, synchronises the control signal (dv) into the clock pulse pattern (f2) of the receiving system (SYST2) and thus results in a delayed (by means of w1) triggering of the forwarding of a data word (DAT), that a control signal (st), which is dependent upon the forwarding clock pulse pattern (f2), is produced for a synchronising circuit (SYN1) assigned to the input end and is likewise synchronised into the clock pulse pattern (f1) of the emitting system (SYST1), avoiding logically non-defined intermediate states in the data- and control path, and thus results in a delayed (by means of f1') triggering of the transfer of a data word (DAT) together with a strobe signal (STR) which controls the reception in the buffer store, and that the buffer store (PUF) includes at least three storage sections (e. g. registers R0 to R2), namely one which makes available the data word (DAT) which is to be forwarded from the buffer store (PUF), one for the bridging of the synchronisation time ($t_{SYN2}$) prior to the forwarding, and one for the bridging of the input time ($t_{RAST2}$) of an intermediate storage request (by means of STR) into the clock pulse pattern (f2) of the receiving system (SYST2).

2. A data transmission device as claimed in claim 1, characterised in that the control signal (st) for the synchronising circuit (SYN1), which is assigned to the input end, is triggered in association with each clock pulse of the forwarding clock pulse pattern (f2).

3. A data transmission device as claimed in claim 2, characterised in that the control signal (st) in each case leads the clock pulse of the forwarding clock pulse pattern (f2) by the delay time ($t_{SYN2}$) governed by the synchronising circuit (SYN2) assigned to the output end.

4. A data transmission device as claimed in claim 3, characterised in that the delay time ($t_{DYN2}$) corresponds to a whole-numbered multiple of the clock pulse period time ($t_2$) of the forwarding clock pulse pattern (f2), and that where the delay time ($t_{SYN2}$) is greater than the clock pulse period time ($t_2$), the minimum number of storage sections (R...) in the buffer store (PUF) is correspondingly increased in order to facilitate continuous data flow at the output end.

5. A data transmission device as claimed in one of the claims 1 to 4, characterised in that the control signal (st) for the synchronising circuit (SYN1) which is assigned to the input end is derived from the existence of at least one free storage section (R...) of the buffer store (PUF) (signal frei), and that the control signal which has been synchronised-in releases those clock pulses of the clock pulse pattern (f1) of the data emitting system (SYST1), which occur within its active duration, as request signals for the consecutive transfer of data words (DAT).

6. A data transmission device as claimed in claim 5, characterised in that both the front- and the rear flank of the free signal (frei) are delayed by the synchronising circuit (SYN1) which is assigned to the input end, that the minimum number of storage sections (R...) of the buffer store (PUF) is increased by n individual registers in accordance with those clock pulses of the clock pulse pattern (f1) of the data emitting system (SYST1) which are still active during the delayed decay time, and that the free signal (frei) is produced only when at least (n + 1) individual registers of the buffer store are still free.

7. A data transmission device as claimed in claim 5, characterised in that only the front flank of the free signal (frei) is delayed by the synchronising circuit (SYN1) which is assigned to the input end, whereas the rear flank becomes momentarily active and suppresses following clock pulses of the clock pulse pattern (f1) of the data emitting system (SYST1) as request signals.

8. A data transmission device as claimed in one of the claims 2 to 4 in combination with claim 5, characterised in that directly upon the disappearance of the free signal (frei), the synchronising circuit (SYN1) which is assigned to the input end is switched over to the control signals (st) which are emitted in association with each clock pulse of the forwarding clock pulse pattern (f2).

9. A data transmission device as claimed in one of the claims 2 to 4, characterised in that the synchronising circuit (SYN2) which is assigned to the output end is not released until the minimum number of storage sections (R...) in the buffer store (PUF), which are required for a continuous data flow at the output end, is filled with data words (DAT).

10. A data transmission device as claimed in one of the claims 1 to 9, characterised in that the synchronising circuit (SYN1 and SYN2) comprises at least one intercept flip-flop (FA-FF) and at least one rear-flank-controlled synchronising flip-flop (SYN-FF), where the intercept flip-flop (FA-FF), as RS flip-flop, receives the control signal (st or dv) which is to be synchronised-in, and the subsequently connected synchronising flip-flop (SYN-FF) receives the output signal of the intercept flip-flop (FA-FF) with the relevant synchronising clock pulse (f1 or f2) which it forwards, delayed by the synchronising time ($t_{SYN1}$ or $t_{SYN2}$), via an AND-gate (U1) as transmission clock signal (f1' or w1).

11. A data transmission device as claimed in claim 10, characterised in that in order to avoid the suppression of requests in the event of too rapid a succession of requests (st = f2), at least two synchronising units are provided each of which comprise an intercept flip-flop (SA-FF1, SA-FF2) and a synchronising flip-flop (SYN-FF1, SYN-FF2) with AND-gates (U31, U32) which are actuated in cyclic succession via a preceding control switching element (e. g. a rear-flank-controlled flip-flop T-FF), with each incoming control signal (st) which is to be synchronised.

12. A data transmission device as claimed in claim 10, characterised in that in order to avoid the suppression of requests in the event of too rapid a succession of requests (st = f2), at least two intercept flip-flops (FA-FF1 and FA-FF2) are provided which are connected in series via an AND-gate (U2), where the second signal input of each AND-gate (U2) of the series arrangement can be blocked via a delay element (VZ1) from the output of the following intercept flip-flop (FA-FF1), and the preceding intercept flip-flop (FA-FF2) can likewise be reset via a delay element (VZ2) from the output of the AND-gate (U2) of the series arrangement.

13. A data transmission device as claimed in one of the claims 10 to 12, characterised in that the intercept flip-flops (FA-FF) of the synchronising circuit (SYN1, SYN2) are at least in part an integral component of the control unit (P-ST) of the buffer store (PUF).

14. A data transmission device as claimed in one of the claims 1 to 13, characterised in that the registers (e. g. R0 to R3) of the buffer store (PUF) form a series arrangement through which the data words (DAT) of the emitting system (SYST1) pass in stepped fashion, where the data word which is intermediately stored in the last individual register (R0) is forwarded to the receiving system (SYST2) in synchronism with the system clock pulse (f2) thereof,

that apart from that individual register (R0) of the series arrangement which forms the output end of the buffer store (PUF), each individual register (R3 to R1) is assigned a monitoring switching element (K-FF1 to K-FF3) which serves to display the state of seizure of the associated individual register (R3 to R1),

that these monitoring switching elements (K-FF1 to K-FF3), via preceding AND-gates (U2, U3, U4) which serve to block the setting inputs (S), likewise form a series arrangement, where the setting output of each monitoring switching element (e. g. K-FF1) is connected to the inverted, second signal input of the associated AND-gate (e. g. U2), that the transfer clock pulses (UT) for the input storage of a data word into the associated individual registers (R3 to R1) and the reset signals for the preceding monitoring switching elements (K-FF1 and K-FF2) are derived from the output of the following AND-gate (U2 to U4) in the series arrangement so that in dependence upon the incoming strobe signal (STR), the data words (DAT) are consecutively forwarded in stepped fashion from individual register to individual register directly to the free individual register (e. g. R1) which lies closest to the output end of the buffer store (PUF) and

that the individual register (R0) which forms the output end of the buffer store (PUF) is assigned, in place of the monitoring switching element, a rear-flank-controlled synchronising flip-flop (SYN-FF1) followed by an AND-gate (US) which, in dependence upon the preceding monitoring switching element (K-FF3), is clock controlled by the clock pulses of the system clock signal (f2) of the receiving system (SYST2) and releases the following AND-gate (US) in order to trigger release — delayed by the synchronising time ($T_{SYN2}$) — of the transfer clock pulse (UT) for the last individual register (R0) for the forwarding of a data word (DAT) and in order to reset the preceding monitoring switching element (K-FF3).

15. A data transmission device as claimed in claim 5, characterised in that the synchronising flip-flop (SYN-FF1) is preceded by an OR-gate (01), and that the outputs of all the preceding monitoring switching elements (K-FF1 to K-FF3) and of the input intercept flip-flop (FA-FF) are each connected to a signal input of the OR-gate (01).

16. A data transmission device as claimed in one of the claims 1 to 13, characterised in that the individual registers (e. g. R0 to R3) of the buffer store (PUF) can be selectively actuated for the input and read-out of data words (DAT),

that each individual register (e. g. R0) is assigned a flip-flop (for example, S0) which is rear-flank-controlled by the strobe signal (STR) and is followed by an AND-gate (e. g. U10), where all the flip-flops (S0 to S3) form a ring shift register in order to characterise the particular receiving individual register (R...), and the write signals (SS) are each obtained from the output of one of the AND-gates (U10 to U13) in dependence upon the set state of the flip-flops and upon the existence of the strobe signal (STR),

that the AND-gates (U10 to U13) are each followed by an RS-flip-flop as input intercept flip-flop (EIN0 to EIN3) in order to characterise the existence of read commands for the buffer store (PUF) and

that via a series operating output network unit (AND-gates U20 to U23), the outputs of the input intercept flip-flops (EIN0 to EIN3) activate, in the sequence in which they become operative, individually assigned synchronising circuits (e. g. SYN0, U30, AUS0) which, following the expiry of the necessary synchronising time ($t_{SYN2}$), in dependence upon the system clock signal (f2) of the receiving system (SYST2), supply the read signal (LS) for the associated individual register (e. g. R0) and a reset signal for the preceding intercept flip-flop (e. g. EIN0), where the read signals (LS) are maintained (by flip-flops AUS0 to AUS3) for the duration of one entire clock period ($t_2$) of the governing system clock signal (f2).

17. A data transmission device as claimed in claim 16, characterised in that for each individual register (R0 to R3) there is provided an additional bistable switching element (RS-flip-flops BEL0 to BEL3) which characterises the state of seizure thereof and which is set on the response of the associated input intercept flip-flop (EIN0 to EIN3) and in contrast to the input intercept flip-flop is not reset until the end of the read duration ($t_2$), and that a control signal (st) which may possibly be required and which characterises the free state of at least one individual register (R...) in the buffer store (PUF) is derived via an OR-gate (02) from the signal outputs of the switching elements (BEL0 to BEL3) which indicate the state of seizure.

18. A data transmission device as claimed in one of the claims 14 to 17, in particular for the supply of a data transmission system which forms the receiving system, characterised in that in order to maintain a continuous data flow at the output of the buffer store (PUF) in the absence of data words (DAT), in place of the data words, filler words are gated into the data flow for the receiving system (SYST), and that the control signal (FW) for the gating in of the filler words is derived directly from the inverted signal of one of the switching elements (SYN-FF2 or AUS0 to AUS3) which initiates the transmitting period ($t_2$) for the data words.

19. A data transmission device as claimed in one of the claims 1 to 18, in particular in association with a computer as data emitting system, characterised in that for the synchronisation, the buffer store (PUF) is preceded by an elastic buffer store (S-PUF) with independent input and output control, where the output control is dependent upon the control of the buffer store for the synchronisation.

20. A data transmission device as claimed in claim 19, in particular for the coupling of two computer systems by an interposed transmission system which has transmitting and receiving devices connected by a transmission channel and which operates with a system clock signal (f2) which is independent of the system clock signals (f1) of the two computer systems, characterised in that

the series arrangement of the elastic buffer store (S-PUF) and buffer store for the synchronisation (S-SYN-ST) to the system clock signal (f2) of the transmission system prior to the transmitting device (SIG/SEN) at the transmitting end corresponds at the receiving end to a mirror-image arrangement of the series arrangement of buffer store (E-SYN-ST) for synchronisation to the system clock signal (f1) of the connected computer and the elastic buffer store (E-PUF) following the receiving device (EMP/SI-K),

that each clock pulse of the transmission clock pattern (f2), which does not coincide with a filler word, serving simultaneously as strobe signal (STR), causes incoming data words (DAT) to be directly transferred into the buffer store (E-SYN-ST) for synchronisation and

that in association with the synchronising circuit which is assigned to the output end of this buffer store (E-SYN-ST), a control signal (STR') is produced which is clock-synchronous with the receiving system clock signal (f2) and which causes the data word (DAT), which is awaiting forwarding, to be transferred in the clock cycle which has been initiated.

21. A data transmission device as claimed in claim 20, characterised in that those items of data (DW) which are supplied by the data emitting computer and which result in a programme interruption in the receiving computer are characterised by an additional marker bit (M) within the data word (DAT) which is to be transmitted, and data words characterised in this manner are individually forwarded, that in order to prevent data words (DAT) which are stored in the elastic buffer store (E-PUF) at the receiving end being forwarded in packeted fashion to the receiving computer when, within such a packet, one of the data words (DAT) is marked by an additional marker bit (M), when the data words characterised in this way are input into the elastic buffer store (E-PUF), an additional characteristic (MV) is stored in an additional store (Z-SP) of the elastic buffer store (E-PUF) under the same write address (SAD), that during each read process for the elastic buffer store (E-PUF) this additional store (Z-SP) is operated by a read address (LAD-V) which, in comparison to the currend read address (LAD) for the elastic buffer store (E-PUF), is increased by a distance address (DAD) characterising the packet length when at least one packet is stored, and that each read additional characteristic (MV) or each marker bit (M) input into the buffer store (E-PUF) when less than one packet is stored (PUF DAD), initiates a counting process with a number (e. g. 8) of counting steps which corresponds to the distance address (DAD), and during each counting process a blocking signal (STREAMEN) is produced in order to prevent the packeted call-up of the data words (DAT), stored in the elastic buffer store (E-PUF) by the receiving computer.

## Revendications

1. Dispositif de transmission de données entre deux systèmes de transmission de données (SYST1 et SYST2) commandés de façon synchrone, et comportant une mémoire tampon

(PUF), constituée par plusieurs sections de mémoire servant à réaliser la mémorisation temporaire respectivement d'un mot de données (DAT), ainsi que deux dispositifs de commande, dont l'un, servant de dispositif de commande d'entrée, commande en synchronisme avec la cadence (f1) du système (SYST1) délivrant les données, le transfert respectivement d'un mot de données (DAT) dans une section de la mémoire tampon (PUF), qui est disponible pour la prise en charge, et dont l'autre, servant de dispositif de commande de sortie, commande en synchronisme avec la cadence (f2) du système (SYST2) recevant les données, la retransmission respectivement d'un mot de données (DAT) depuis une section de la mémoire tampon (PUF), disponible pour la sortie, au système (SYST2) recevant les données, caractérisé par le fait qu'il est prévu un dispositif (P-ST) de commande de la mémoire tampon, qui contrôle l'état de remplissage de la mémoire tampon (PUF) et qui produit, lors de la mémorisation temporaire d'un mot de données (DAT), un signal de commande correspondant (dv) qui est envoyé à un circuit de synchronisation (SYN2) associé au côté sortie et qui à nouveau réalise une insertion synchronisée du signal de commande (dv) dans la trame de cadence (f2) du système récepteur (SYST2), tout en évitant des états intermédiaires, indéfinis du point de vue logique, dans la voie de transmission de données et de commande, et déclenche de ce fait d'une façon retardée (avec w1) la retransmission d'un mot de données (DAT), que pour un circuit de synchronisation (SYN1) associé au côté entrée, se trouve produit un signal de commande (st) qui dépend de la trame de cadence de retransmission (f2) et qui est aussi une insertion synchronisée dans la trame de cadence (f1) du système émetteur (SYST1), tout en évitant des états intermédiaires indéfinissables du point de vue logique, dans la voie de transmission de données et de commande, et déclenche de ce fait d'une manière retardée (avec f1) le transfert d'un mot de données (DAT) ainsi qu'un signal d'échantillonnage (ST1) commandant la réception dans la mémoire tampon, et que la mémoire tampon (PUF) comporte au moins trois sections de mémoire (par exemple les registres R0 à R2), à savoir une section de mémoire pour la préparation du mot de données (DAT) devant être retransmis à partir de la mémoire tampon (PUF), une section de mémoire servant à combler la durée de synchronisation ($t_{SYN2}$) avant la retransmission, et une section de mémoire servant à combler la durée de synchronisation ($t_{RAST2}$) d'une demande effectuée à la mémoire intermédiaire (avec STR) dans la trame de synchronisation (f2) du système récepteur (SYST2).

2. Dispositif de transmission de données suivant la revendication 1, caractérisé par le fait que le signal de commande (st) pour le circuit de synchronisation (SYN1), associé au côté entrée, est déclenché en liaison avec chaque impulsion de cadence de la trame de cadence de retransmission (f2).

3. Dispositif de transmission de données suivant la revendication 2, caractérisé par le fait que le signal de commande (st) est en avance respectivement du temps de retard ($t_{SYN2}$) conditionné par le circuit de synchronisation (SYN2) associé au côté sortie, par rapport à l'impulsion de cadence respective de la trame de cadence de retransmission (f2).

4. Dispositif de transmission de données suivant la revendication 3, caractérisé par le fait que le temps de retard ($t_{SYN2}$) correspond au multiple entier de la durée de la période de cadence ($t_2$) de la trame de cadence de retransmission (f2) et que dans le cas où le temps de retard ($t_{SYN2}$) est supérieur à la durée de la période de cadence ($t_2$), le nombre minimum de sections de mémoire (R...) situées dans la mémoire tampon (PUF) est accru de façon correspondante de manière à permettre la délivrance d'un flux de données continu sur le côté sortie.

5. Dispositif de transmission de données suivant l'une des revendications 1 à 4, caractérisé par le fait que le signal de commande (st) prévu pour le circuit de synchronisation (SYN1) disposé du côté entrée est dérivé de la présence d'au moins une section libre (R...) de la mémoire tampon (PUF) (signal libre), et que le signal de commande inséré de façon synchronisée libère des impulsions de cadence, qui apparaissent pendant sa durée d'activité, de la trame de cadence (f1) du système (SYST1) délivrant les données, en tant que signaux de demande pour le transfert successif de mots de données (DAT).

6. Dispositif de transmission de données suivant la revendication 5, caractérisé par le fait qu'aussi bien le flanc avant que le flanc arrière du signal (libre) est retardé par le circuit de synchronisation (SYN1) associé au côté entrée, que le nombre minimum des sections (R...) de la mémoire tampon (PUF) est accru de n registres individuels, conformément aux impulsions de cadence, devenant encore actives pendant la durée de décroissance retardée, de la trame de cadence (f1) du système (SYST1) délivrant les données, et que le signal (libre) n'est produit que lorsqu'au moins (n + 1) registres individuels de la mémoire tampon sont encore libres.

7. Dispositif de transmission de données suivant la revendication 5, caractérisé par le fait que seul le flanc avant du signal (libre) est retardé par le circuit de synchronisation (SYN1) associé au côté entrée, pendant que le flanc arrière devient actif instantanément et supprime les impulsions de cadence suivantes, servant de signaux de demande, de la trame de cadence (f1) du système (SYST1) délivrant les données.

8. Dispositif de transmission de données suivant les revendications 2 à 4 en liaison avec la revendication 5, caractérisé par le fait qu'immédiatement après la disparition du signal (libre), le circuit de synchronisation (SYN1) associé au côté entrée est commandé de façon inverse par les signaux de commande (st) délivrés en liaison avec chaque impulsion de cadence de la trame de cadence de retransmission (f2).

9. Dispositif de transmission de données suivant l'une des revendications 2 à 4, caractérisé par le fait que le circuit de synchronisation (SYN2) associé au côté sortie n'est respectivement libéré que lorsque le nombre minimum, nécessaire pour un flux de données continu du côté sortie, de sections (R...) de la mémoire tampon (PUF) est occupé par des mots de données (DAT).

10. Dispositif de transmission de données suivant l'une des revendications 1 à 9, caractérisé par le fait que le circuit de synchronisation (SYN1 et SYN2) est constitué par au moins une bascule bistable de captage (FA-FF) et par au moins une bascule bistable de synchronisation (SYN-FF) commandée par le flanc arrière, la bascule bistable de captage (FA-FF) recevant, en tant que bascule bistable de type RS, le signal de commande (st ou dv) devant être synchronisé, et la bascule bistable de synchronisation (SYN-FF) branchée en aval prend en charge le signal de sortie de la bascule bistable de captage (FA-FF) à la cadence associée de synchronisation (f1 ou f2) et retransmet ce signal en tant que signal de cadence de transmission (f1' ou w1), retardé du temps de synchronisation ($t_{SYN1}$ ou $t_{SYN2}$), par l'intermédiaire d'une porte ET (U1).

11. Dispositif de transmission de données suivant la revendication 10, caractérisé par le fait que pour éviter des suppressions de demandes dans le cas de demandes (st = f2) se succédant trop rapidement, il est prévu au moins deux unités de synchronisation constituées chacune par une bascule bistable de captage (FA-FF1 ou FA-FF2) et une bascule bistable de synchronisation (SYN-FF1 ou SYN-FF2) comportant des portes ET (U31 ou U32), qui sont placées successivement et de façon cyclique à l'état actif par l'intermédiaire d'un circuit de commande branché en amont (par exemple un étage à bascule (T-FF) commandé par le flanc arrière) lors de l'arrivée de chaque signal de commande (st) devant être synchronisé.

12. Dispositif de transmission de données suivant la revendication 10, caractérisé par le fait qu'afin d'éviter des suppressions de demandes dans le cas de demandes se succédant trop rapidement (st = f2), il est prévu au moins deux bascules bistables de captage (FA-FF1 et FA-FF2) branchées en série respectivement par l'intermédiaire d'une porte ET (U2), la seconde entrée des signaux de chaque porte ET (U2) du circuit série pouvant être bloquée par l'intermédiaire d'une ligne à retard (VZ1) à partir de la sortie de la bascule bistable de captage (FA-FF1) suivante, et la bascule bistable de captage (FA-FF2) précédente pouvant être également ramenée à l'état initial par l'intermédiaire d'une ligne à retard (VZ2) à partir de la sortie de la porte ET (U2) du circuit série.

13. Dispositif de transmission de données suivant l'une des revendications 10 à 12, caractérisé par le fait que les bascules bistables de captage (FA-FF) du circuit de synchronisation (SYN1, SYN2) font, au moins partiellement, partie intégrante du dispositif de commande (P-ST) de la mémoire tampon (PUF).

14. Dispositif de transmission de données suivant l'une des revendications 1 à 13, caractérisé par le fait que les registres (par exemple R0 à R3) de la mémoire tampon (PUF) forment un circuit série et sont traversées successivement, pas à pas, par les mots de données (DAT) du système émetteur (SYST1), le mot de données respectivement mémorisé temporairement dans le dernier registre individuel (R0) étant retransmis en synchronisme avec la cadence (f2) du système récepteur (SYST2), à ce dernier,

que, hormis le registre individuel (R0) du circuit série, constituant l'extrémité de sortie de la mémoire tampon (PUF), à chaque registre individuel (R3 à R1) est associé un circuit de contrôle (K-FF1 à K-FF3) servant à indiquer l'état d'occupation du registre individuel associé (R3 à R1), que ces circuits de commande (K-FF1 à K-FF3) forment également un circuit série, moyennant respectivement le branchement amont de circuits ET (U2 ou U3 ou U4) pour réaliser le blocage des entrées de positionnement (S), l'entrée de positionnement de chaque circuit de commande (par exemple K-FF1) étant reliée à la seconde entrée inverseuse de signaux du circuit ET associé (par exemple U2), que les cadences de transfert (ÜT) pour la mémorisation d'un mot de données dans les registres individuels (R3 à R1) associés respectivement et les signaux de remise à l'état initial pour les circuits de commande (K-FF1 et K-FF2) branchés respectivement en amont, sont dérivés de la sortie du circuit ET (U2 à U4), respectivement branché en aval, du circuit série de telle sorte que, en fonction du signal arrivant d'échantillonnage (ST1), les mots de données (DAT) sont retransmis successivement pas à pas d'un registre individuel au suivant, directement au registre individuel libre (par exemple R1) qui est respectivement le plus près de l'extrémité de sortie de la mémoire tampon (PUF), et

qu'aux registres individuels (R0) constituant l'extrémité de sortie de la mémoire tampon (PUF) se trouve associée, à la place du circuit de contrôle, une bascule bistable de synchronisation (SYN-FF1) commandée par le flanc arrière et en aval de laquelle est branché un circuit ET (U5) et qui, en fonction du circuit de contrôle précédent (K-FF3), est commandée par les impulsions de la cadence (f2) du système récepteur (SYST2) et libère le circuit ET (U5) branché en aval, pour le déclenchement, s'effectuant avec un retard égal à la durée de synchronisation ($t_{SYN2}$), de la cadence de transfert (ÜT) pour le dernier registre individuel (R0) en vue de la retransmission d'un mot de données (DAT) et pour la remise à l'état initial du circuit de contrôle précédent (K-FF3).

15. Dispositif de transmission de données suivant la revendication 15, caractérisé par le fait qu'un circuit OU (01) est branché en amont de la bascule bistable de synchronisation (SYN-FF1) et que les sorties de tous les circuits de contrôle précédents (K-FF1 à K-FF3) et la bascule bistable de captage d'entrée (FA-FF) sont reliés à des entrées respectives de signaux du circuit OU (01).

16. Dispositif de transmission de données suivant l'une des revendications 1 à 13, caractérisé par le fait que les registres individuels (par exemple R0 à R3) de la mémoire tampon (PUF) peuvent être commandés au choix pour l'enregistrement ou pour la lecture de mots de données (DAT),

qu'à chaque registre individuel (par exemple R0) est associé un étage à bascule (par exemple S0) commandé par le flanc arrière du signal d'échantillonnage (STR) et en aval duquel est branché un circuit ET (par exemple U10), tous les étages à bascule (S0 à S3) formant un registre à décalage en anneau servant à caractériser le registre à décalage (R...) respectivement récepteur et les signaux d'enregistrement (SS) étant dérivés respectivement de la sortie de l'un des circuits ET (U10 à U13), en fonction de l'état de positionnement des étages à bascule et de la présence du signal d'échantillonnage (STR),

qu'en aval du circuit ET (U10 à U13) sont branchés respectivement des étages à bascule de type RS en tant que bascules bistables de captage d'entrée (EIN0 à EIN3) pour la caractérisation des ordres présents de lecture pour la mémoire tampon (PUF) et

que, dans l'ordre où elles deviennent actives, les sorties des bascules bistables de captage d'entrée (EIN0 à EIN3) placent à l'état actif, par l'intermédiaire d'un réseau de sortie opérant en série (circuits ET U20 à U23), des circuits de synchronisation (par exemple SYN0, U30, AUS0) associés individuellement et qui après l'écoulement de la durée nécessaire de synchronisation ($t_{SYN2}$), délivrent, en fonction de la cadence (f2) du système récepteur (SYST2), le signal de lecture (LS) pour le registre individuel associé (par exemple R0) et un signal de remise à l'état initial pour la bascule bistable de captage (par exemple EIN0) respectivement branchée en amont, les signaux de lecture (LS) étant maintenus pendant la durée d'une période complète ($t_2$) de la cadence déterminée (f2) du système (à l'aide d'étages à bascule AUS0 à AUS3).

17. Dispositif de transmission de données suivant la revendication 7, caractérisé par le fait qu'il est prévu pour chaque registre individuel (R0 à R3) un circuit bistable supplémentaire (étages à bascule de type RS BEL0 à BEL3), caractérisant un état d'occupation dudit registre et qui est positionné par la réponse de l'étage à bascule bistable de captage d'entrée associée (EIN0 à EIN3) et, contrairement aux bascules bistables de captage d'entrée, n'est ramené à l'état initial qu'à la fin de la durée de lecture ($t_2$), et qu'un signal de commande (st), qui est éventuellement nécessaire et caractérise l'état libre d'au moins un registre individuel (R...) dans la mémoire tampon (PUF), est dérivé par l'intermédiaire d'un circuit OU (02), des sorties de signaux des circuits (BEL0 à BEL3) affichant l'état d'occupation.

18. Dispositif de transmission de données suivant l'une des revendications 14 à 17, notamment pour l'alimentation d'un système de transmission de données formant le système récepteur, caractérisé par le fait que pour maintenir un flux de données continu à la sortie de la mémoire tampon (PUF) dans le cas de l'absence de mots de données (DAT), on injecte des mots de remplissage à la place des mots de données dans le flux de données pour le système récepteur (SYST) et que le signal de commande (FW) déclenchant l'injection des mots de remplissage est dérivé directement du signal inversé d'un ou des circuits (SYN-FF2 ou AUS0 à AUS3) déclenchant la période d'émission ($t_2$) pour les mots de données.

19. Dispositif de transmission de données suivant l'une des revendications 1 à 18, notamment en liaison avec un calculateur servant de système délivrant des données, caractérisé par le fait qu'en amont de la mémoire tampon (PUF) pour la synchronisation il est prévu une mémoire tampon élastique (S-PUF) comportant des dispositifs indépendant de commande d'entrée et de commande de sortie, parmi lesquels le dispositif de commande de sortie dépend du dispositif de commande de la mémoire tampon pour la synchronisation.

20. Dispositif de transmission de données suivant la revendication 19, notamment pour réaliser le couplage de deux systèmes calculateurs au moyen d'un système de transmission intercalé comportant des dispositifs d'émission et de réception reliés par un canal de transmission et qui opère avec une cadence de système (f2) qui est indépendante des cadences (f) des deux systèmes calculateurs, caractérisé par le fait

qu'au circuit série formée d'une mémoire tampon élastique (S-PUF) et d'une mémoire tampon pour la synchronisation (S-SYN-ST) sur la cadence (f2) du système de transmission en amont du dispositif d'émission (SIG/SEN) du côté émission, correspond, du côté réception, un agencement symétrique constitué par le circuit série formé d'une mémoire tampon (E-SYN-ST) pour la synchronisation sur la cadence (f1) du système du calculateur raccordé, et d'une mémoire tampon élastique (E-PUF) conformément au dispositif de réception (MP/SI-K),

que chaque impulsion de cadence, ne coïncidant pas avec un mot de remplissage de la trame de cadence de transmission (f2), provoque, simultanément en tant que signal d'échantillonnage (STR), le transfert de mots de données arrivants (DAT) dans la mémoire tampon (E-SYN-ST) pour la synchronisation, et

qu'en liaison avec le circuit de synchronisation associé au côté sortie de cette mémoire tampon (E-SYN-ST) se trouve produit un signal de commande (STR'), possédant une cadence synchrone avec la cadence (f2) du système récepteur et qui impose le transfert du mot de données (DAT), prêt en vue de sa retransmission, dans le cycle de cadence respectivement déclenché.

21. Dispositif de transmission de données suivant la revendication 20, caractérisé par le fait que les données (DW), qui sont délivrées par le calculateur délivrant les données et qui provoquent une interruption du programme dans le calculateur récepteur, sont caractérisées par un bit de marquage supplémentaire (M) situé à l'intérieur du mot de données (DAT) devant être respectivement transmis, et que des mots de données caractérisés de cette manière sont retransmis individuellement, que, afin d'empêcher une retransmission par paquets de mots de données (DAT) mémorisés dans la mémoire tampon élastique (E-PUF) du côté réception, au calculateur récepteur, lorsqu'à l'intérieur d'un tel paquet l'un des mots de données (DAT) est marqué par un bit de marquage supplémentaire (M), lors de l'enregistrement des mots de données ainsi caractérisés dans la mémoire tampon élastique (E-PUF), un signal caractéristique supplémentaire (MV) est mémorisé dans une mémoire supplémentaire (Z-SP) de la mémoire tampon élastique (E-PUF) à la même adresse d'enregistrement (SAD), que lors de chaque opération de lecture pour la mémoire tampon élastique (E-PUF), cette mémoire supplémentaire (Z-SP) est commandée pour la lecture avec une adresse (LAD-V) qui, par rapport à l'adresse de lecture actuelle (LAD) pour la mémoire tampon élastique (E-PUF), est accrue d'une adresse de distance (LAD) caractérisant la longueur du paquet, lorsqu'au moins un paquet est mémorisé, et que, lorsque moins d'un paquet est mémorisé (PUF DAD), chaque signal caractéristique supplémentaire (MV) lu ou chaque bit de marquage (M) enregistré dans la mémoire tampon (E-PUF) déclenche un processus de comptage avec un nombre (par exemple 8) de pas de comptage correspondant à l'adresse de distance (DAD) et que pendant chaque processus de comptage en cours, un signal de blocage (STREAMEN) servant à empêcher l'appel par paquets des mots de données (DAT) mémorisés dans la mémoire tampon élastique (E-PUF), est produit par le calculateur récepteur.

PUF

| SYST 1 | --DAT→ | R3 ¦ R2 ¦ R1 ¦ R0 | --DAT→ | SYST 2 |

STR → P - ST ---STR'--→

f1' ↑

f1 ○→ SYN 1

dv ○ ↓ wl ○ ↑

SYN 2 ←○ f2

○ st

**FIG 1**

---

PUF

| SYST 1 | --DAT→ | R5 ¦ R4 ¦ R3 ¦ R2 ¦ R1 ¦ R0 | --DAT→ | SYST 2 |

STR → P - ST ---STR'--→

f1' ○↑

f1 ○→ SYN 1

frei ○

dv ○ ↓ wl ○ ↑

SYN 2 ←○ f2

○ st

**FIG 2**

---

PUF

| SYST 1 | --DAT→ | R4 ¦ R3 ¦ R2 ¦ R1 ¦ R0 | --DAT→ | SYST 2 |

STR → P - ST ---STR'--→

f1' ○↑

f1 ○→ SYN 1

frei ○ dv ○ ↓ wl ○ ↑

SYN 2 ←○ f2

MUX ⊠ 1 ○ +
       0

**FIG 3**

# FIG 4

# FIG 5

0 091 657

FIG 6

FIG 7

FIG 8

3

# FIG 9

# FIG 10

0 091 657

FIG 11

FIG 12

# FIG 13

FIG 14

**FIG 15**

0 091 657

FIG 16

# F I G 17

FIG 18